# EUROPEAN PATENT APPLICATION

(11) **EP 1 830 317 A1**
(43) Date of publication of application: **05.09.2007**
(21) Application number: 07011657.9
(22) Date of filing: 07.06.2002
(51) Int. Cl.: G06Q 20/00, G07F 7/00

(54) **Electronic money system**

(30) Priority: 11.06.2001 JP 2001175433; 11.06.2001 JP 2001176070
(62) Divisional of application: 02738639.0
(71) Applicant: Sony Corporation, Minato-ku Tokyo (JP)
(72) Inventor: Kawashima, Takashi, Tokyo 107-0062 (JP); Hagiwara, Kotaro, Tokyo 107-0062 (JP); Hayaashi, Hirofumi, Tokyo 107-0062 (JP); Hasumi, Yoshitsugu, Tokyo 107-0062 (JP); Shiotani, Keiji, Tokyo 107-0062 (JP); Suganuma, Maki, Tokyo 107-0062 (JP)
(74) Representative: Horner, David Richard

(57) **Abstract**

An electronic money system related to network type and IC card type electronic money for preventing an affiliated store from failure to collect purchase amount and for permitting shopping to be securely accomplished through the intermediary of a network. A user terminal (2-1) accesses an affiliated store terminal (4-1) through the intermediary of the Internet (1) · to purchase a commodity. The affiliated store terminal (4-1) refers to a settlement apparatus (7) through the intermediary of the Internet (1) for the balance of electronic money stored in a database (25) of an e-Wallet (24) of the user of the user terminal (2-1). If the balance is larger than a purchase amount, then the settlement apparatus (7) subtracts the purchase amount from the balance to update the balance. If the balance is smaller than the purchase amount, then an overdraft amount based on a credit level of the user is added to the balance, and if the resulting total amount is larger than the purchase, the settlement is carried out.

## Description

### Technical Field

The present invention relates to an automatic crediting function of IC card type and network type electronic money. More specifically, the present invention relates to an IC card and electronic money crediting system provided with an electronic money card function used for cashless purchase of commodities of small amounts and, more particularly, to an IC card and electronic money crediting system provided with an electronic money card function combined with a credit card function. Furthermore, the present invention relates to an electronic money system, information processing apparatus and method, a program, and a recording medium and, more particularly, to an electronic money system, information processing apparatus and method, a program, and a recording medium that allow commodities to be purchased further securely through the intermediary of a network.

### Background Art

Recently, with the disseminating Internet, it has become common for numerous users to purchase a variety of commodities and services through the intermediary of the Internet. In the present description, the commodities will include services in addition to ordinary so-called commodities.

As the settlement methods for purchasing commodities through the intermediary of the Internet, credit cards and network type electronic money are known. As the network type electronic money, Cyber CoinDigi Cash of Cyber Cash and Millicent of ecashCompaq are known (both being service marks). In this case, a user installs beforehand a dedicated electronic wallet software in a computer, and manages the information on the amount the user withdraws from his or her credit card or bank account at an affiliated bank by using the electronic wallet software. When the user does shopping at an online shop, the electronic wallet software notifies the shop of crediting, and the purchase amount is subtracted from the amount information managed by the electronic wallet software.

As the settlement means stored in a portable medium, the electronic money stored in a prepaid card, a credit card, a debit card, or an IC card.

The prepaid cards are used in the form of, for example, telephone cards used with payphones, expressway cards used at tollgates, or boarding cards for buses, railways, etc. The prepaid cards have currency values, which are equivalent to the case paid to purchase the cards, in the formed magnetic data or the like. Each time a commodity is purchased using the card, the balance is recorded in the form of magnetic data. When the balance reaches zero, the card can no longer be used. The prepaid cards provide the same function as cash, permitting cashless purchase of commodities to be accomplished without the need for identifying the users of the cards.

A credit card has a cashless commodity purchasing function and a credit sales function for settlement after the elapse of a predetermined period of time. At the time of purchasing a commodity, the owner of the card presents the credit card to a store, giving a signature, as necessary, and the payment is delayed for a predetermined period of time from the date of purchase of the commodity. The store to which the card is presented asks a credit card company through online communication or the like to check for the credit of the card, and the card company notifies the store of the credit checking result. This enables the store to obviate credit risks.

A debit card has a commodity purchase function added to a cash card used for withdrawing money from a bank deposit. The debit card can be used within the range of affiliated financial organizations handling debit cards and affiliated stores. When the cash card is inserted into a terminal of an affiliated store at the time of purchasing a commodity and a PIN number is entered, the card is connected to an affiliated financial organization through the intermediary of a dedicated network (e.g., CAFIS of NTT data company), and a liquidation amount is transferred to the account of the affiliated store from the deposit account of the card user to accomplish immediate settlement.

An electronic money card is a card used with an electronic money (digital cash) system for achieving money transaction by using electronic technology. The electronic money card uses an IC card in which a storage device, such as a semiconductor memory, is embedded. By transferring cash through a predetermined money receiving machine, the currency value equivalent to the received amount of money is stored in the form of electronic data in the storage device of the IC card. Each time a commodity is purchased by using the card, the balance is stored in the storage device in the form of electronic data, and when the balance reaches zero, the card is no longer usable. The card, however, can be repeatedly used by filling the card with electronic money by transferring money through the money receiving machine. The electronic money card can be considered as a reusable prepaid card, and it provides the same function as cash, thus permitting cashless purchase of commodities without the need for identifying a card user. The electronic money cards and prepaid cards are frequently used for the settlement of small amounts ranging from a few thousand yen to a few ten thousand yen.

In short, it may be said that the prepaid cards and electronic money cards are for "prepaid," the debit cards are for "immediate payment," and the credit cards are for "pay later." Furthermore, the prepaid cards or electronic money cards have currency values in the cards themselves, while the credit cards or debit cards do not have any currency values in the cards themselves. In addition, the prepaid cards or electronic money cards do not usually carry the names of card owners, so that the users are not identified, while the nominal persons whose names are shown on cards are the users of the credit cards or debit cards.

In recent years, multi-functional integral cards combining a plurality of card functions are available. For example, there are multi-functional integral cards that combine the functions of electronic money cards and the functions of credit cards, and multi-functional integral cards combining the functions of electronic money cards and the functions of debit cards. These are generally implemented by IC cards equipped with information processing apparatuses, such as microcomputers, and radio communication functions in addition to storage devices in cards.

Since the IC cards are provided with radio communication functions, simply holding the cards above data read/write apparatuses allows predetermined processing to be carried out and a variety of data to be rewritten in a contactless mode. For instance, a user of a multi-functional integral IC card combining the function of an electronic money card and the function of a credit card enjoys an advantage provided by the single card in that the user can immediately pay by using the electronic money card function when purchasing a small-amount commodity, while selecting the payment at a later date by the credit card function when purchasing a large-amount commodity.

However, in a conventional network type electronic money system, a user can shop only within the limitation of the amount information managed in the electronic wallet software. As a result, if, for example, the information on the amount in an electronic wallet indicates that the amount is smaller than the purchase amount of a commodity to be purchased, then the purchase cannot be accomplished. This has been posing a problem in that the user cannot purchase the commodity unless the user performs an operation to fill the electronic wallet with the amount of shortage.

Hence, there have been cases where a user intending to purchase a commodity is discouraged by the extra burden and gives up the purchase. This leads to the loss of chances for users to securely purchase commodities and also the loss of chances for sellers to sell their commodities, resulting in a cause for preventing the dissemination of electronic commodity transactions.

Regarding the portable type electronic money, even the multi-functional integral IC card provided with the electronic money function requires the user thereof go to a dedicated money receiving machine installed at a limited number of locations to fill the card with electronic money when the balance of the electronic money becomes low.

Accordingly, when the user purchases a commodity at a store, if the balance of the electronic money stored in the multi-functional integral IC card is smaller than the selling price of the commodity to be purchased, then user has to pay the difference in cash or leaves the store once to look for a dedicated money receiving machine to receive money to add to the balance of the electronic money, then go back to the store to purchase the commodity by using the electronic money. Paying the difference in cash like this prevents the user from enjoying the advantage of the cashless purchase. Furthermore, it is bothersome for the user to go all the way to a dedicated money receiving machine to carry out the money receiving processing and go back to the store for purchasing a commodity when the commodity is not so expensive. This may prevent the expansion of the commercial transaction activities based on electronic money.

For instance, Japanese Unexamined Patent Publication No. 11-259577 discloses the following. A settlement card equipped with both of the function for using a credit and the function for using an electronic wallet performs settlement by automatically selecting one of the types of settlement on the basis of the data of the card. Hence, even if an insufficient balance occurs when the settlement is performed using the electronic wallet, the type of payment for the insufficient balance amount is automatically selected to carry out the settlement. This method, however, presents a shortcoming in that a credit card is sometimes used to purchase even an extremely inexpensive commodity is purchased, possibly complicating the procedure for purchasing the commodity.

In recent years, as another mode for purchasing commodities, virtual stores (cyber shops) created on communication networks rather than actual stores (real shops) are available for purchasing commodities. In the virtual stores also, a multi-functional integral IC card having the aforesaid electronic money card function can be used, so that the same above-mentioned problem that arises when the electronic money card is used at an actual store. Even if the electronic money balance is found to be insufficient when purchasing a commodity at a virtual store, there is no need to go to a physically distanced money receiving machine, which is required in the case of an actual store. However, a user is still required to leave the virtual store once to access a virtual money receiving machine installed in a virtual store town (cyber mall), and hold the multi-functional integral IC card above a read/write apparatus at hand so as to carry out processing for increasing the electronic money balance, then go back to the virtual store.

An object of the present invention is to solve the problems by performing automatic crediting of IC card type and network type electronic money.

Another object, of the present invention is to provide an IC card with an electronic money card function and an electronic money crediting system that permit effortless crediting of electronic money when the balance of electronic money is smaller than the selling price of a commodity to be purchased at the time of purchasing the commodity.

Still another object of the present invention is to enable each user to securely purchase commodities and to restrain the loss of chances for commodity sellers to sell their commodities so as to promote the dissemination of electronic commodity transactions.

A further object of the present invention is to enable the sellers of commodities to securely collect the money of purchase amounts of commodities.

### Disclosure of Invention

The above object regarding an IC card type electronic money is fulfilled by an electronic money crediting system characterized by being provided with a POS terminal for performing settlement by electronic money that has a determiner for determining an electronic money balance received from an IC card and the scale of the selling price of a commodity and a settlement means for carrying out settlement processing by adding a predetermined amount to the balance after carrying out predetermined credit processing if the electronic money balance is smaller than the selling price, and an IC card having an electronic money card function and another settlement function, a storage device that stores card information, including electronic money balance data, and permits reading and writing, and a controller that updates the electronic money balance by electronic money received from the POS terminal after predetermined credit processing is carried out if the electronic money balance at the time of purchasing a commodity is smaller than the selling price of the commodity desired to be purchased.

The aforesaid object is fulfilled by a POS terminal for carrying out settlement by electronic money that is characterized by having a determiner for determining an electronic money balance received from an IC card and the scale of the selling price of a commodity and a settlement means for carrying out settlement processing by adding a predetermined amount to the balance after carrying out predetermined credit processing if the electronic money balance is smaller than the selling price.

In the foregoing POS terminal according to the present invention, the predetermined credit processing includes the processing that uses a unique settlement number to transmit a credit check request to a credit checking server, and determines whether the credit is acceptable on the basis of a credit result received from the credit checking server.

In the POS terminal according to the present invention, the predetermined credit processing includes the processing for determining whether the credit is acceptable on the basis of the credit rejection data received from the credit checking server. Alternatively, the predetermined credit processing includes the processing for extracting the use log data of a credit card accumulated in its IC card and for determining whether the date and time of use is closer to the current point than a preset reference date and time.

The aforesaid object can be accomplished by an IC card that has an electronic money card function and another settlement function, including a storage device that stores card information, including the data on electronic money balance, and permits read/write, and a controller that updates the electronic money balance by the electronic money deposited through a POS terminal at a store after predetermined credit processing is carried out if the electronic money balance at the time of purchasing a commodity is smaller than the selling price of the commodity desired to be purchased.

A program for performing settlement by electronic money in accordance with the present invention has a determining means for determining the electronic money balance received from the IC card and the level of the selling price of a commodity, and a settlement means for adding a predetermined amount to a balance to perform settlement processing after carrying out predetermined credit processing if the electronic money balance is smaller than the selling price of the commodity.

In a settlement program in accordance with the present invention, the predetermined credit processing includes the processing for transmitting a credit checking request to a credit checking server by using a unique settlement number, and determining whether the credit is acceptable on the basis of a credit result received from the credit checking server. Alternatively, the predetermined credit processing includes the processing for determining whether credit is acceptable on the basis of the credit rejection data distributed from a credit check server. Further alternatively, the predetermined credit processing includes the processing for extracting the use log data of a credit card accumulated in its IC card to determine whether the date and time of use is closer to the current point than a preset reference date and time.

The aforesaid object is accomplished by a settlement method for carrying out settlement by electronic money, whereby the electronic money balance received from an IC card and the level of a selling price of a commodity are determined, and if the electronic money balance is smaller than the selling price, then a predetermined amount is added to the balance after predetermined credit processing is implemented so as to carry out the settlement processing.

In the settlement method in accordance with the present invention, the predetermined credit processing includes the processing for transmitting a credit checking request to a credit checking server by using a unique settlement number, and determining whether the credit is acceptable on the basis of a credit result received from the credit checking server. Alternatively, the predetermined credit processing includes processing for determining whether credit is acceptable on the basis of the credit rejection data distributed from a credit checking server. Further alternatively, the predetermined credit processing includes processing for extracting the use log data of a credit card accumulated in its IC card to determine whether the date and time of use is closer to the current point than a preset reference date and time.

Regarding a network type electronic money, a first another information processing apparatus accesses a second information processing apparatus through the intermediary of a network to request the purchase of a commodity, the second information processing apparatus inquires of a third information processing apparatus through the intermediary of a network about the electronic money balance owned by a user in relation to the price of a commodity when it receives an application for the purchase of the commodity through the intermediary of a network from the first information processing apparatus. Upon receipt of the inquiry from the second information processing apparatus, the third information processing apparatus checks the balance of a user that it manages, and if the balance is found to be below the price of the commodity, then the third information processing apparatus carries out credit processing and adds an amount based on the result of the credit processing to the balance of the user.

An information processing apparatus in accordance with the present invention is equipped with a managing means for managing the electronic money of a user purchasing a certain commodity through the intermediary of a network, and an adding means for carrying out credit processing and adding a crediting amount based on the result of the credit processing to the balance of the user if the balance of the electronic money of the user managed by the managing means is below the purchase amount of the commodity.

The information processing apparatus in accordance with the present invention is further equipped with a storage means for storing the credit information for carrying out the credit processing, allowing the adding means to carry out the credit processing on the basis of the credit information stored in the storage means.

The adding means ranks the user on the basis of a result of the credit processing, and decides on the crediting amount on the basis of the ranking.

The information processing apparatus in accordance with the present invention is further equipped with a requesting means for accessing a crediting server through the intermediary of the network to request credit processing, allowing the adding means to carry out credit processing on the basis of a result of the crediting performed by the crediting server in response to the request from the requesting means.

The managing means is able to manage the balance of user's electronic money in association with a settlement number, and to settle the crediting amount on the basis of the settlement number. The managing means is able to manage the card number of a user's credit card as the settlement number. The managing means is able to manage a user's account number at a financial institution as the settlement number. The information processing apparatus in accordance with the present invention is further equipped with an accepting means for accepting an inquiry on the balance of user's electronic money from another information processing apparatus through the intermediary of a network, allowing the adding means to carry out adding on the basis of the inquiry on the balance accepted by the accepting means.

An information processing method in accordance with the present invention includes a management step for managing the electronic money of a user purchasing a certain commodity through the intermediary of a network, and an adding step for carrying out credit processing and adding a crediting amount based on the result of the credit processing to the balance of the user if the balance of the electronic money of the user managed by the processing of the management step is below the purchase amount of the commodity.

The information processing method in accordance with the present invention is further equipped with a storing step for storing the credit information for carrying out the credit processing, allowing the adding step to carry out the credit processing on the basis of the credit information stored by the processing of the storing step.

The processing in the adding step ranks the user on the basis of a result of the credit processing, and decides on the crediting amount on the basis of the ranking.

The information processing method in accordance with the present invention is further equipped with a requesting step for accessing a crediting server through the intermediary of the network to request credit processing, allowing the adding step to carry out credit processing on the basis of a result of the crediting performed by the crediting server in response to the request by the processing of the requesting step.

In the processing of the management step, the balance of user's electronic money can be managed in association with a settlement number, and the crediting amount can be settled on the basis of the settlement number. In the processing of the management step, the card number of a user's credit card can be managed as the settlement number. In the processing of the management step, a user's account number at a financial institution can be managed as the settlement number. The information processing method in accordance with the present invention is further equipped with an accepting step for accepting an inquiry on the balance of user's electronic money in relation to the purchase amount from another information processing apparatus through the intermediary of a network, allowing the adding step to carry out adding on the basis of the inquiry on the balance accepted by the accepting step.

A program in accordance with the present invention is a program for an information processing apparatus connected to another information processing apparatus through the intermediary of a network, and causes a computer to carry out a management step for managing the electronic money of a user purchasing a certain commodity through the intermediary of a network, and an adding step for carrying out credit processing and adding a crediting amount based on the result of the credit processing to the balance of the user if the balance of the electronic money of the user managed by the processing of the management step is below the purchase amount of the commodity.

The program in accordance with the present invention is further equipped with a storing step for storing the credit information for carrying out the credit processing, allowing the adding step to carry out the credit processing on the basis of the credit information stored by the processing of the storing step.

The processing in the adding step ranks the user on the basis of a result of the credit processing, and decides on the crediting amount on the basis of the ranking.

The program in accordance with the present invention is further equipped with a requesting step for accessing a crediting server through the intermediary of the network to request credit processing, allowing the adding step to carry out credit processing on the basis of a result of the crediting performed by the crediting server in response to the request by the processing of the requesting step.

In the processing of the management step, the balance of user's electronic money can be managed in association with a settlement number, and the crediting amount can be settled on the basis of the settlement number.

In the processing of the management step, the card number of a user's credit card can be managed as the settlement number. In the processing of the management step, a user's account number at a financial institution can be managed as the settlement number.

The program in accordance with the present invention is further equipped with an accepting step for accepting an inquiry on the balance of user's electronic money in relation to the purchase amount from another information processing apparatus through the intermediary of a network, allowing the adding step to carry out adding on the basis of the inquiry on the balance accepted by the accepting step.

A program for a recording medium in accordance with the present invention is a program for an information processing apparatus connected to another information processing apparatus through the intermediary of a network, including a management step for managing the electronic money of a user purchasing a certain commodity through the intermediary of a network, and an adding step for carrying out credit processing and adding a crediting amount based on the result of the credit processing to the balance of the user if the balance of the electronic money of the user managed by the processing of the management step is below the purchase amount of the commodity.

According to the electronic money system, the information processing apparatus and method, the program, and the recording medium, if the balance of user's electronic money under management is below a purchase amount of a commodity, then credit processing is performed, and a crediting amount based on a result of the credit processing is added to the user's balance.

### Brief Description of the Drawings

Fig. 1 is a diagram showing the configuration of an electronic money system according to a first embodiment.

Fig. 2 is a block diagram showing the configuration of a settlement apparatus shown in Fig. 1.

Fig. 3 is a block diagram showing the configuration of an affiliated store terminal shown in Fig. 1.

Fig. 4 is a block diagram showing the configuration of a user terminal shown in Fig. 1.

Fig. 5 is a flowchart for explaining the processing by the user terminal shown in Fig. 1.

Fig. 6 is a flowchart for explaining the processing by an affiliated store terminal shown in Fig. 1.

Fig. 7 is a flowchart for explaining the processing by a settlement apparatus shown in Fig. 1.

Fig. 8 is an arrow chart illustrating the relationship among the processing of the user terminal, the affiliated store terminal, and the settlement apparatus shown in Fig. 1.

Fig. 9 is another arrow chart illustrating the relationship among the processing of the user terminal, the affiliated store terminal, and the settlement apparatus shown in Fig. 1.

Fig. 10 is yet another arrow chart illustrating the relationship among the processing of the user terminal, the affiliated store terminal, and the settlement apparatus shown in Fig. 1.

Fig. 11 is a diagram illustrating a display example in the processing of step S2 shown in Fig. 5.

Fig. 12 is a diagram illustrating a display example in the processing of step S5 shown in Fig. 5.

Fig. 13 is a diagram illustrating a display example in the processing of step S7 shown in Fig. 5.

Fig. 14 is a diagram illustrating a display example in the processing of step S9 shown in Fig. 5.

Fig. 15 is a diagram illustrating a display example in the processing of step S11 shown in Fig. 5.

Fig. 16 is a diagram illustrating an example of a telegraphic message transmitted in step S28 shown in Fig. 6.

Fig. 17 is a diagram illustrating an example of the contents of a client database 13 shown in Fig. 1.

Fig. 18 is a diagram illustrating an example of the contents of a database 25 shown in Fig. 1.

Fig. 19 is a diagram illustrating an example of a table of credit levels shown in Fig. 1.

Fig. 20 is a diagram showing a schematic configuration of an electronic money crediting system 301 in accordance with a second embodiment of the present invention.

Fig. 21 is a diagram illustrating a schematic configuration of the multi-functional integral type IC card 310 used in the electronic money crediting system 301 in accordance with the second embodiment of the present invention.

Fig. 22 is a flowchart illustrating an operation procedure in the electronic money crediting system 301 in accordance with the second embodiment of the present invention.

Fig. 23 is another flowchart illustrating an operation procedure in the electronic money crediting system 301 in accordance with the second embodiment of the present invention.

Fig. 24 is a diagram showing changes in an electronic money balance in the multi-functional integral type IC card 310 used in the electronic money crediting system 301 in accordance with the second embodiment of the present invention.

Fig. 25 is a flowchart illustrating the operation procedure in the electronic money crediting system 301 in accordance with a fourth embodiment of the present invention.

Fig. 26 is a diagram showing a schematic configuration of an electronic money crediting system 301 in accordance with a fifth embodiment of the present invention.

Fig. 27 is a diagram showing in time series the procedure of an electronic transaction between a communication terminal 330 of a person interested in buying a commodity and a POS terminal 302 at a virtual shop in the electronic money crediting system 301 in accordance with the fifth embodiment of the present invention.

Fig. 28 is a diagram illustrating an exemplary screen of a website of a virtual shop displayed by a browser of the communication terminal 330 of the person interested in buying a commodity in the operation procedures in the electronic money crediting system 301 in accordance with the fifth embodiment of the present invention.

### Best Mode for Carrying Out the Invention

Embodiments of the present invention will now be explained in detail with reference to the accompanying drawings. A first embodiment is related to automatic crediting of network type electronic money, and second through fifth embodiments are related to automatic crediting of IC card type electronic money.

### (First Embodiment)

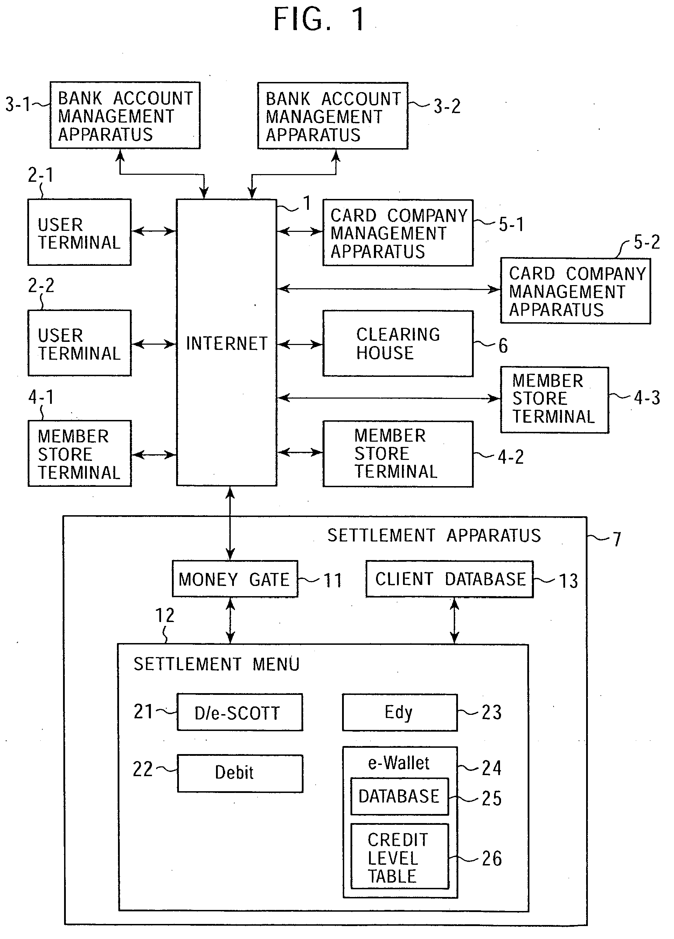

The first embodiment will be explained in conjunction with Fig. 1 through Fig. 19.

Fig. 1 shows the configuration of an electronic money system to which the present invention is applied. In this system, an arbitrary number (two in the case of this example) of user terminals 2-1 and 2-2 is connected to the Internet 1. Furthermore, connected to the Internet 1 is an arbitrary number (three in the case of this example) of affiliated store terminals 4-1 through 4-3 to which the user terminals 2-1 and 2-2 access for purchasing commodities.

In addition, further connected to the Internet 1 are an arbitrary number (two in the case of this example) of card company management apparatuses 5-1 and 5-2 managed by the card companies that issue cards to users, a clearing house 6 that provides a variety of types of information through the intermediary of the Internet 1, and bank account management apparatuses 3-1 and 3-2 for managing the bank accounts at banks that are owned by users 2-1 and 2-2.

A settlement apparatus 7 is also connected to the Internet 1. In the settlement apparatus 7, a settlement menu (software) 12 is connected through the intermediary of a money gate 11 functioning as a firewall. The settlement menu 12 has D/e-SCOTT 21, Debit 22, Edy 23, and e-Wallet 24 (all software). The money gate 11 connects the inputs from the Internet 1 to one of the D/e-SCOTT 21, Debit 22, Edy 23, and e-Wallet 24.

The D/e-SCOTT (trademark) 21 carries out the processing for supporting the credit card sales processing, such as cumbersome crediting task and invoicing task involved in electronic transactions, mail orders, etc. The Debit 22 immediately carries out the procedure for withdrawing a purchase amount from the bank account of a user who uses a debit card to transfer the purchase amount to the bank account of a relevant vendor when the user purchases a commodity. The Edy (trademark) 23 manages an Edy card, and stores the amount withdrawn by a user from his or her own bank account in the Edy card. When the user shops at a store by using the Edy card, the Edy 23 carries out processing to read the Edy card through the intermediary of the terminal of the store, subtract the amount equivalent to the purchase amount from the amount stored in the card, and add the amount to the electronic money account of the vendor.

This enables the user of the Edy card to do shopping for the amount stored in the Edy card.

The amount corresponding to the shopping amount subtracted from the Edy card (the amount corresponding to the value added to the electronic money account of vendors) is transferred to the bank accounts of the vendors. The e-Wallet (trademark) 24 stores the prepaid amount of each user in its built-in database 25. And when each user purchases a certain commodity from the affiliated store terminals 4-1 to 4-3 through the intermediary of the Internet 1, the shopping amount is subtracted from the prepaid amount.

The settlement apparatus 7 has a client database 13, and detailed information on the users and affiliated stores is stored in the client database 13.

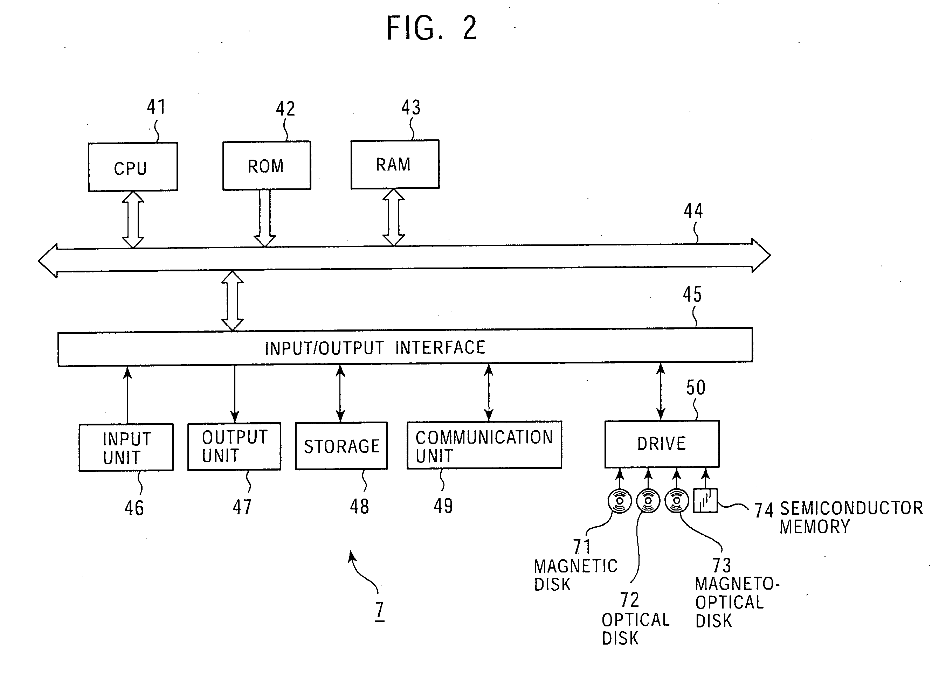

Fig. 2 shows the configuration of the settlement apparatus 7. In Fig. 2, a CPU (Central Processing Unit) 41 carries out diverse types of processing according to a program stored in a ROM (Read Only Memory) 42 or a program loaded into a RAM (Random Access Memory) 43 from a storage 48. The data or the like required for the CPU 41 to carry out various types of processing is also stored in RAM 43, as appropriate. The CPU 41, the ROM 42, and the RAM 43 are interconnected through a bus 44. An input/output interface 45 is also connected to the bus 44.

Connected to the input/output interface 45 are an input unit 46 formed of a keyboard, a mouse, or the like, a display formed of a CRT, an LCD, or the like, an output unit 47 formed of a speaker or the like, the storage 48 formed of a hard disk or the like, and a communication unit 49 formed of a modem, a terminal adaptor, or the like. The communication unit 49 carries out communication processing through the intermediary of a network, including the Internet 1.

A drive 50 is also connected, as necessary, to the input/output interface 45, and a magnetic disk 71, an optical disk 72, a magneto-optical disk 73, or a semiconductor memory 74 or the like is loaded, as appropriate, a computer program read from them being installed in the storage 48, as necessary.

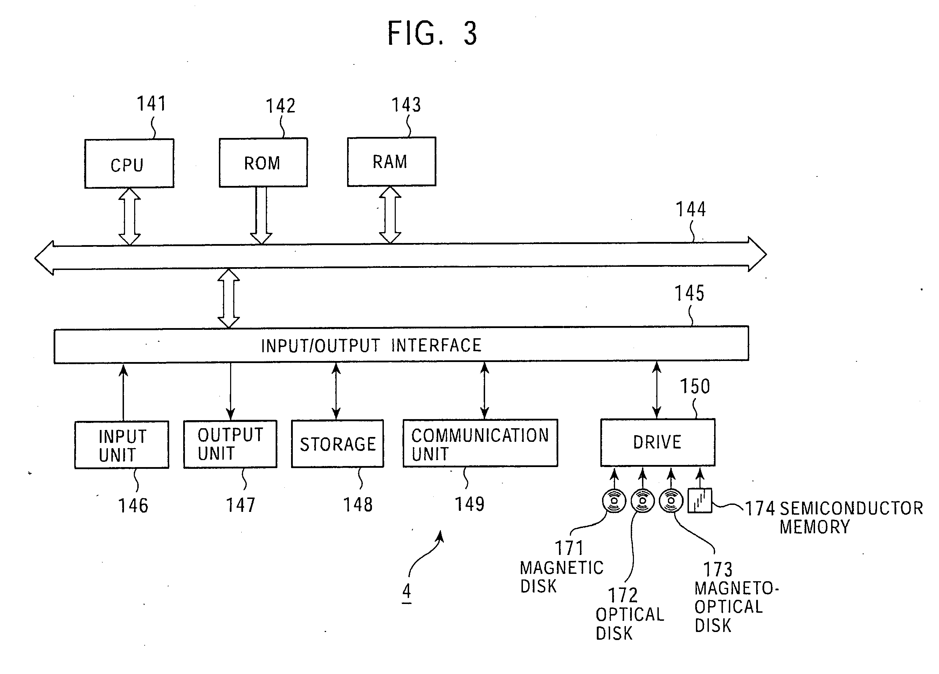

Fig. 3 shows the configuration of an affiliated store terminal 4 (hereinafter simply referred to as the affiliated store terminal 4 if it is not necessary to individually distinguish among the affiliated store terminals 4-1 through 4-3). A CPU 141 through a semiconductor memory 174 have the functions associated with the components of the names corresponding to the CPU 41 through the semiconductor memory 74, etc. of the settlement apparatus 7 shown in Fig. 2, and the explanations thereof will be omitted.

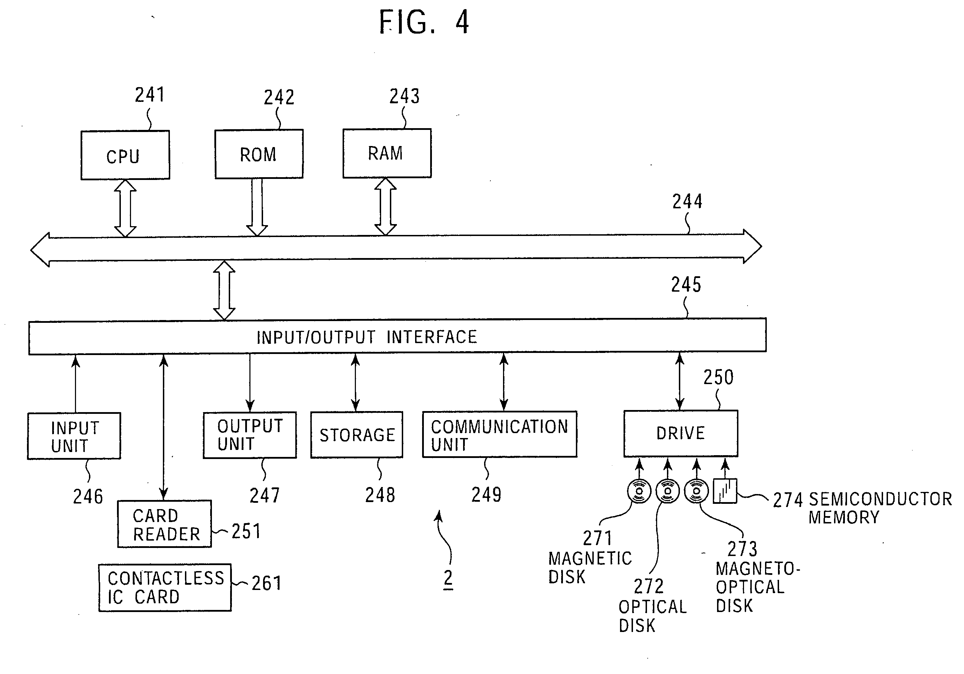

Similarly, Fig. 4 shows the configuration of a user terminal 2 (hereinafter simply referred to as the user terminal 2 if it is not necessary to individually distinguish between the user terminals 2-1 and 2-2). A CPU 241 through a semiconductor memory 274 have the functions associated with the components of the names corresponding to the CPU 41 through the semiconductor memory 74, etc. of the settlement apparatus 7 shown in Fig. 2, and the explanations thereof will be omitted.

The user terminal 2 is provided with a card reader 251. The card reader 251 reads data (including a number embedded in a medium and a card company ID) recorded in a memory incorporated in a contactless IC card 261. The card reader and the contactless IC card 261 are used when the electronic money is used by means of the Edy 23.

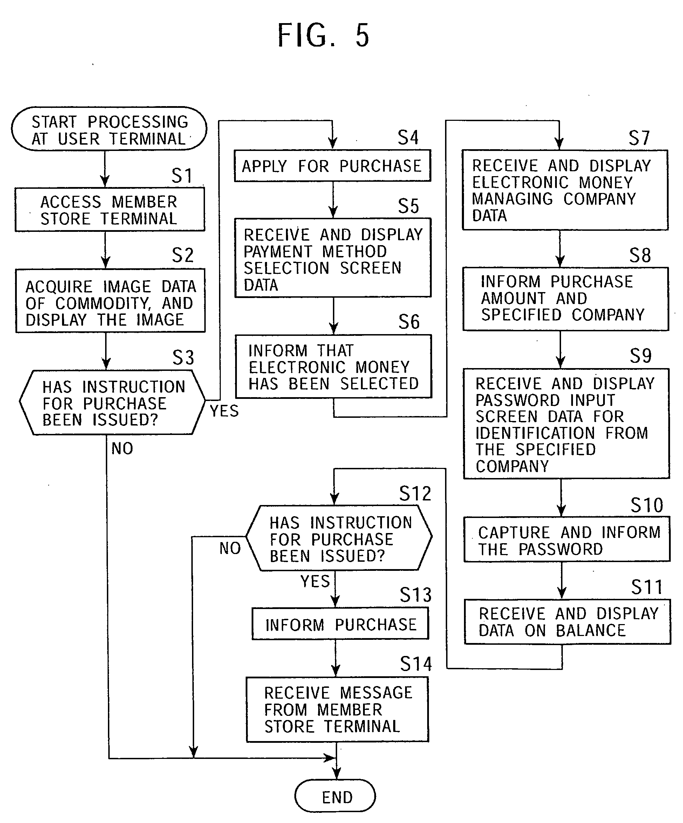

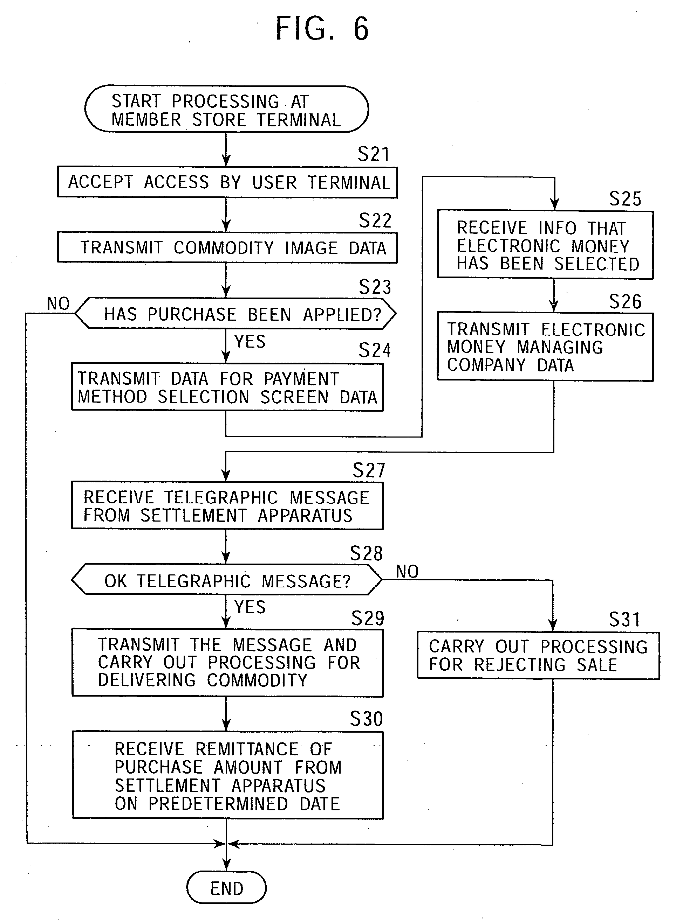

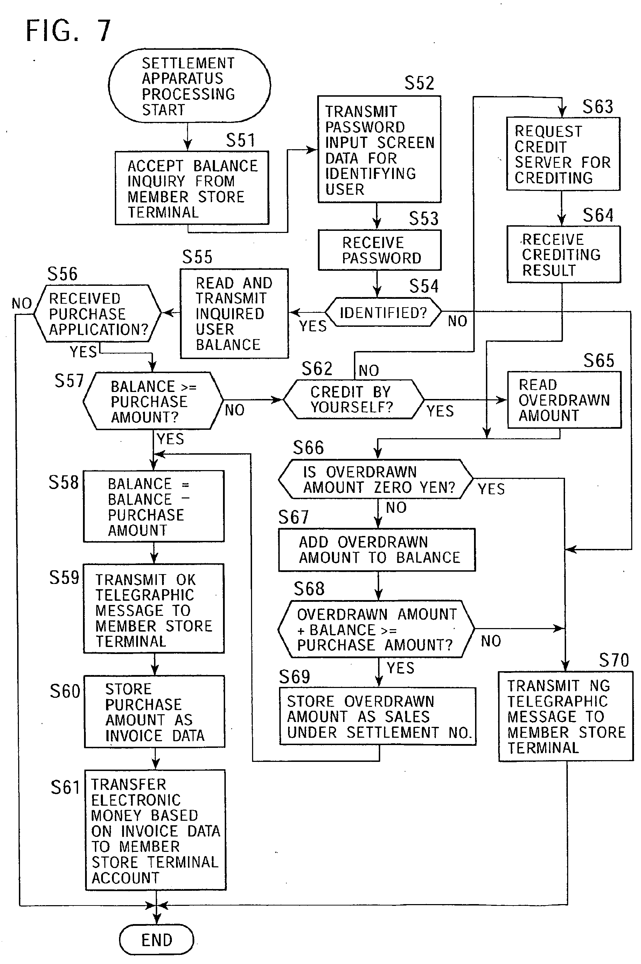

Referring to the flowcharts of Fig. 5 through Fig. 10, the operation performed when a user purchases a commodity in the Internet 1 by using the e-Wallet in the system shown in Fig. 1 will be explained. Fig. 5 shows the processing of the user terminal 2, Fig. 6 shows the processing of the affiliated store terminal 4, and Fig. 7 shows the processing of the settlement apparatus 7, respectively.

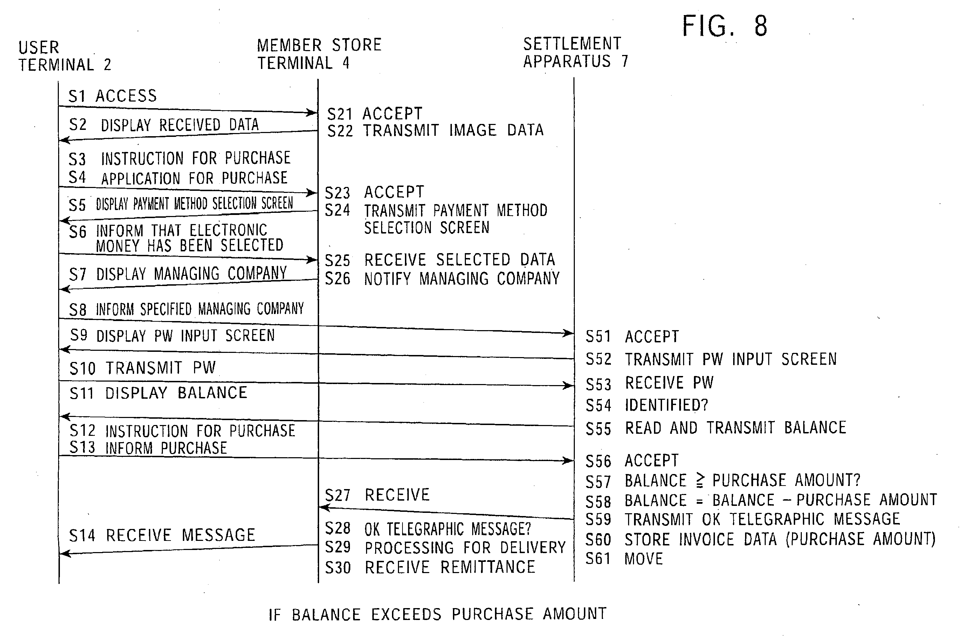

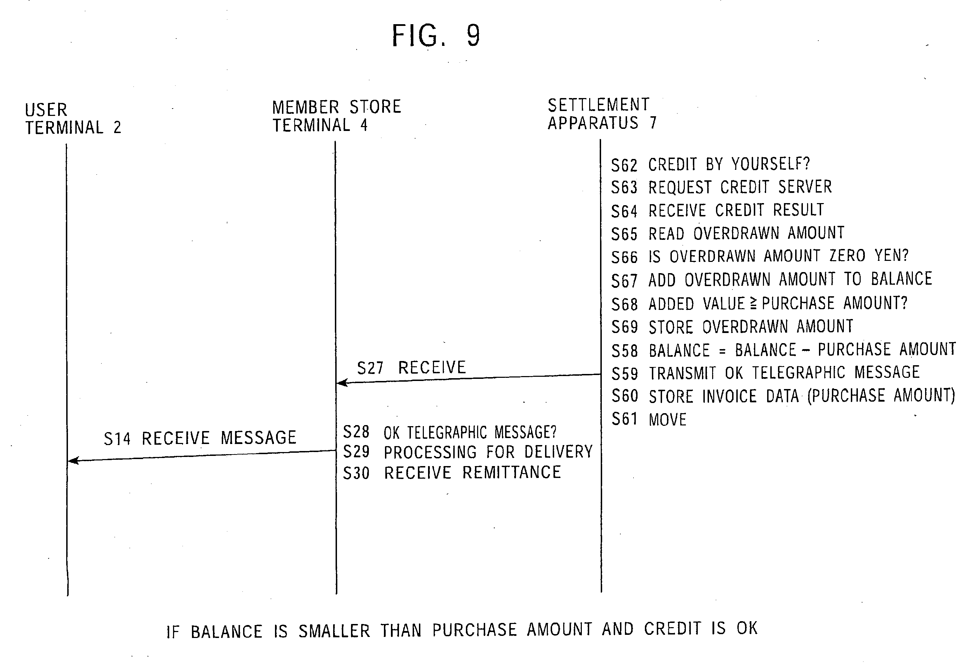

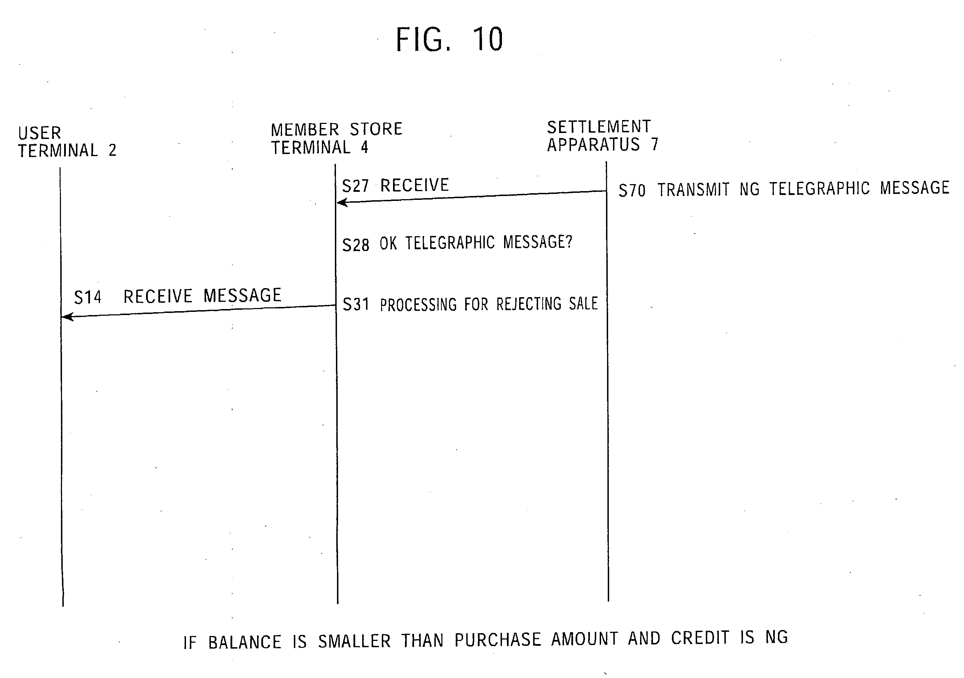

Fig. 8 through Fig. 10 provide easy-to-understand illustrations of temporal changes in the processing of the user terminal 2, the affiliated store terminal 4, and the settlement apparatus 7, and the relative relationship among the processing of each apparatus and the processing of another apparatus. Fig. 8 illustrates the processing applied when a balance exceeds a purchase amount. In contrast to this, Fig. 9 and Fig. 10 represent the processing applied when the balance is smaller than a purchase amount, wherein Fig. 9 represents the processing applied when credit is OK, while Fig. 10 represents the processing applied when credit is not OK (NG).

Referring now to Fig. 5 through Fig. 7, the processing of the user terminal 2, the affiliated store terminal 4, and the settlement apparatus 7 will be individually explained. The mutual processing relationship among the apparatuses can be easily understood by referring to associated steps of Fig. 8 through Fig. 10. When an input unit 246 is operated by a user to issue an instruction for accessing a predetermined affiliated store terminal among the affiliated store terminals 4-2 and 4-3, the CPU 241 controls the communication unit 249 to cause it to access the specified affiliated store terminal 4 through the intermediary of the Internet 1. As it will be discussed hereinafter by referring to Fig. 6, the moment the affiliated store terminal 4 is accessed, it transmits the image data on a commodity (step S22 shown in Fig. 6 and Fig. 8).

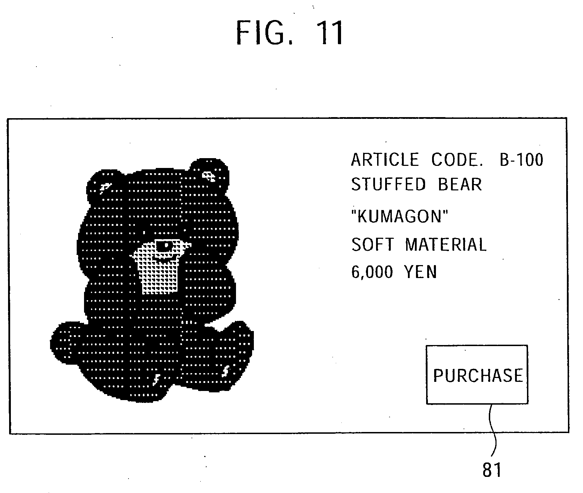

In step S2, the CPU 241 of the user terminal 2 causes the communication unit 249 to receive the image data transmitted from the affiliated store terminal 4 through the intermediary of the Internet 1, outputs the received image data to a display unit constituting an output unit 247 to display it. This displays, for example, the photograph, article code, and the name, description, price, etc. of the commodity, as shown in Fig. 11. In this example, the commodity is "STUFFED BEAR," the article code is "B-100," and the price (purchase amount) is "6,000 yen."

A user decides whether to purchase the commodity from checking the displayed data. To purchase the commodity, the user operates the mouse constituting the input unit 246 to click a purchase button 81.

In step S3, the CPU 241 determines whether a user has specified purchase, that is, whether the purchase button 81 is operated, and if it determines that the purchase button 81 has not been operated, then it terminates the processing.

If it is determined that the purchase button 81 is operated to specify purchase, then the CPU 241 proceeds to step S4 to output a purchase application signal to the affiliated store terminal 4. In response to the transmitted signal, the affiliated store terminal 4 transmits a payment method selection screen (step S24 shown in Fig. 6 and Fig. 8) .

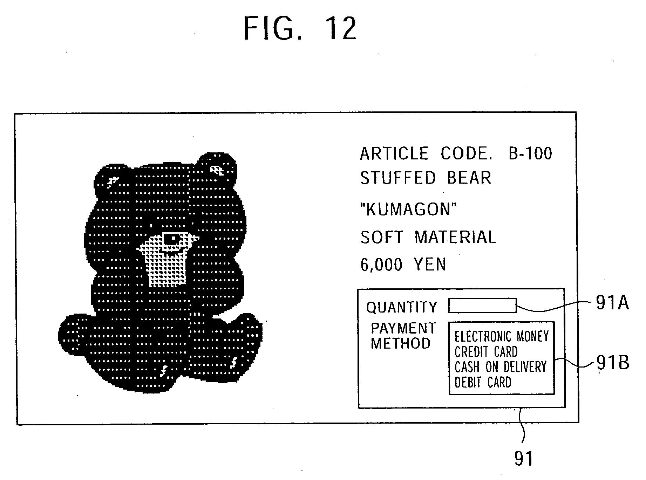

In step S5, the CPU 241 receives the data on the payment method selection screen from the affiliated store terminal 4 through the intermediary of the communication unit 249, and outputs to a display device of the output unit 247 to display it. This causes, for example, a window 91 as shown in Fig. 12, to be displayed.

In the display example shown in Fig. 12, the window 91 displays an input column 91A in which the number of commodities to be purchase is entered and a column 91B for specifying the method for paying the purchase amount of the commodities to be purchased. The user operates the input unit 246 to enter the required quantity in the input column 91A, and selects the payment method desired by the user from among the payment methods displayed in the column 91B. When the E-Wallet 24 is used, the user will select "ELECTRONIC MONEY" as the payment method.

In step S6, if the electronic money is selected according to a user's instruction, then the CPU 241 controls the communication unit 249 to notify the affiliated store terminal 4 of the selected payment method. Based on the notification, the affiliated store terminal 4 transmits the data on the list of companies handling settlement processing (management companies) on the basis of the electronic money of the e-Wallet 24 provided by the settlement apparatus 7, as it will be discussed hereinafter (step S26 shown in Fig. 6 and Fig. 8).

In step S7, upon receipt of the data on the list of the management companies, the CPU 241 outputs the data to the display device of the output unit 247 to display it.

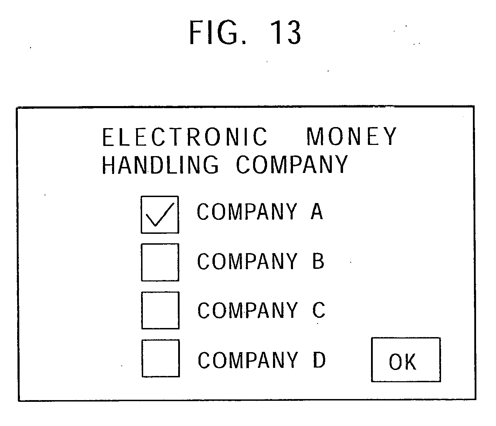

Thus, the list of electronic money handling companies, as shown in, for example, Fig. 13 is displayed. In the example shown in Fig. 13, four companies, namely, company A through company D, are displayed.

Among the displayed companies, the user selects the company that manages the electronic money used by the user for transactions on the Internet 1 (the company operating the settlement apparatus 7 in the case of this example). This selection is accomplished also by operating the input unit 246.

When the selection is performed (when the company is selected and OK button is depressed in Fig. 13), then the CPU 241 notifies the settlement apparatus 7 of the selected company in step S8. When the OK button is depressed, a URL containing specific information on the selected company (company A) in its parameters is generated, and based on the information provided by the URL, directions are given for a settlement screen managed on the settlement apparatus of company A.

Based on the notification, the settlement apparatus 7 transmits a password input screen to the user terminal 2 (steps S51 and 52 shown in Fig. 7 and Fig. 8).

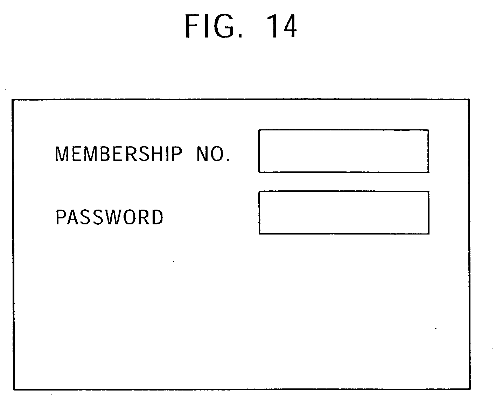

In step S9, when the CPU 241 receives the data on the password input screen for identification that has been transmitted from the apparatus (the settlement apparatus 7 in the case of this example) of the company specified by the processing in step S8, it outputs the data to the display device of the output unit 247 to display it. This causes the password input screen shown in, for example, Fig. 14 to be displayed. In the display example shown in Fig. 14, a column for entering a membership number in addition to the column for a password.

The user fills the columns on the input screen with his or her membership number and password by operating the input unit 246.

In step S10, the CPU 241 captures the data on the entered membership number and password, and informs them to the settlement apparatus 7.

In response to the notification, the settlement apparatus 7 validates whether the password is valid, and if a determination result indicates its validity, then the settlement apparatus 7 reads the balance of the user's electronic money, and transmits the read balance (step S55 shown in Fig. 7 and Fig. 8).

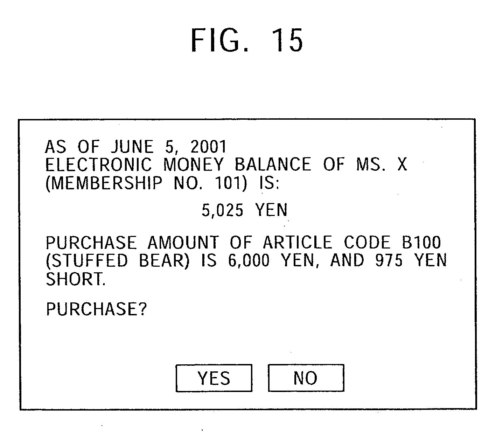

In step S11, when the CPU 241 receives the balance transmitted from the settlement apparatus 7, it outputs the balance to the display device of the output unit 247 to display it. This causes an image shown in, for example, Fig. 15, to be displayed.

In the display example shown in Fig. 15, the balance of the electronic money of X of membership number 101 is "5025 yen," the commodity to be purchased has article code B100, and the purchase amount is 6000 yen. Furthermore, in this case, the purchase amount (6000 yen) is larger than the electronic money balance (5025 yen), so that a message saying "975 yen short" is also displayed. In this display example, another message "PURCHASE?" and a YES button and a NO button to respond thereto are also displayed.

The user can know, from the display, that the balance of his or her electronic money is below the purchase amount. Then the user decides whether to purchase the commodity, and operates the YES button to purchase it, or operates the NO button not to purchase it.

Hence, in step S12, the CPU 241 determines whether purchase has been specified (whether the YES button has been operated), and if the YES button has not been operated (if the NO button has been operated), then the processing is terminated.

If it is determined that the purchase has been specified (if it is determined that the YES button has been operated), then the CPU 241 proceeds to step S13 and notifies the settlement apparatus 7 of the purchase of the commodity. It is alternatively possible to regard that the user intends to purchase the commodity from the fact that the user has pressed the purchase button 81 shown in Fig. 11, and to proceed to credit processing, omitting the display of the checking screen of Fig. 15.

Upon receipt of the purchase notification, the settlement apparatus 7 determines whether the balance of the user's electronic money exceeds the purchase amount, and it exceeds the purchase amount, then the settlement apparatus 7 transmits an OK telegraphic message to the affiliated store terminal 4 (step S59 in Fig. 7 and Fig. 8).

If the balance is smaller than the purchase amount, the settlement apparatus 7 performs credit processing, and if the credit is OK, then it transmits the telegraphic OK message to the affiliated store terminal 4 (step S59 shown in Fig. 7 and Fig. 9).

Upon receipt of the telegraphic OK message, the affiliated store terminal 4 carries out the processing for distributing the commodity and also transmits a message to the user terminal 2 (step S29 shown in Fig. 6, Fig. 8, and Fig. 9).

In step S14, upon receipt of the notification from the affiliated store terminal 4, the CPU 141 outputs it to the display device of the output unit 147 to display it.

If the balance is smaller than the purchase amount and the credit processing indicates NG (if the overdraft amount is zero yen or if the amount obtained by adding the balance to the overdraft amount is smaller than the purchase amount even though it is not zero yen), then the settlement apparatus 7 transmits the NG telegraphic message to the affiliated store terminal 4 (step S70 shown in Fig. 7 and Fig. 10).

Upon receipt of the NG telegraphic message from the settlement apparatus 7, the affiliated store terminal 4 carries out sales rejection processing (step S31 shown in Fig. 6 and Fig. 10), and transmits a corresponding message.

In step S14, upon receipt of the message, the CPU 141 outputs it to the display device of the output unit 147 to display it.

If it has been possible to purchase the commodity, then the message (the message generated by the processing of step S29 shown in Fig. 6, Fig. 8, and Fig. 9) will be, for example, "Thank you for buying the commodity. The commodity will be immediately sent to you."

On the contrary, if it has been impossible to purchase the commodity, then a message such as, for example, "The amount of e-Wallet is not enough to purchase the commodity." will be displayed (the message transmitted by the processing of step S31 shown in Fig. 6 and Fig. 10).

Hence, it can be determined whether the user has been able to purchase the commodity from such a message.

Referring now to the flowchart of Fig. 6, the descriptions will be given of the processing of the affiliated store terminal 4 carried out in association with the processing of the user terminal 2 shown in Fig. 5.

In step S21, when the CPU 141 of the affiliated store terminal 4 accepts an access from the user terminal 2 (the access based on the processing of step S1 shown in Fig. 5), it reads image data on the commodity specified by the user from the storage 148 in response to the access and causes the image data to be transmitted from the communication unit 149 to the user terminal 2 through the intermediary of the Internet 1 in step S22. As described above, the image data transmitted in this manner is received by the user terminal 2 and displayed (step S2 shown in Fig. 5 and Fig. 8, and Fig. 11).

Furthermore, as discussed above, when the user applies for purchase, the signal for the application is transmitted from the user terminal 2 (step S4 of Fig. 5 and Fig. 8). In step S23, the CPU 141 determines whether an application for purchase has been received from the user terminal 2. If no application for purchase is found, then the processing is terminated.

If the application for purchase is found, then the CPU 141 proceeds to step S24 where the CPU 141 reads the data on the payment method selection screen stored in the storage 148 and causes the data to be transmitted to the user terminal 2 through the intermediary of the communication unit 149. The image data is received by the user terminal 2 and displayed, as described above (step S5 shown in Fig. 5 and Fig. 8, and Fig. 12).

In response to the display, a signal for selecting electronic money is transmitted from the user terminal 2, as described above.

In step S25, upon receipt of the selection signal from the user terminal 2, the CPU 141 reads the data on the list of companies handing electronic money that has been stored in the storage 148, and transmits the data to the user terminal 2 in step S26. This causes the image shown in, for example, Fig. 13 to be displayed at the user terminal 2 (step S7 shown in Fig. 5 and Fig. 8).

The user selects one company from the list of companies handling the electronic money, and notifies the settlement apparatus 7 of the selected company (step S8 shown in Fig. 5 and Fig. 8).

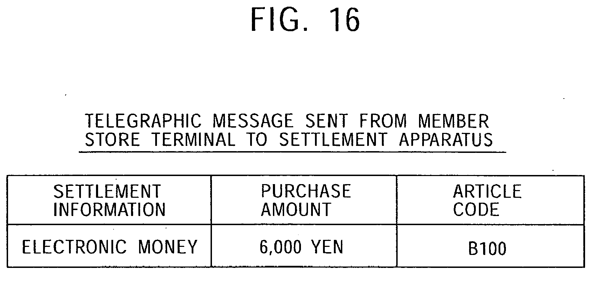

Fig. 16 shows telegraphic message examples in this case. In the examples, the settlement information to be used indicates that the electronic money has been selected, the purchase amount is 6000 yen, and the article code is B100.

In response to the telegraphic message (balance inquiry), the settlement apparatus 7 sends a request for entering a password to the user terminal 2, and carries out processing to identify the user on the basis of the password (steps S53 and S54 shown in Fig. 7 and Fig. 8).

When the user has been identified, the settlement apparatus 7 reads the balance of the user and transmits the balance to the user terminal 2 (step S55 shown in Fig. 7 and Fig. 8). When the user sees the balance and issues a notice of purchase of a commodity (step S13 in Fig. 5 and Fig. 8), the settlement apparatus 7 transmits the OK telegraphic message to the affiliated store terminal 4 if the balance exceeds the purchase amount or the total of the balance and an overdraft amount exceeds the purchase amount (step S59 shown in Fig. 7, Fig. 8, and Fig. 9). The settlement apparatus 7 transmits the NG telegraphic message to the affiliated store terminal 4 if the balance is smaller than the purchase amount or the overdraft amount is zero yen or the total of the overdraft amount and the balance is smaller than the purchase amount (step S70 shown in Fig. 7 and Fig. 10).

In step S27, the CPU 141 receives the telegraphic message transmitted from the settlement apparatus 7 through the intermediary of the communication unit 149. And in step S28, the CPU 141 determines whether the telegraphic message received in the processing of step S27 is the OK telegraphic message, that is, the telegraphic message permitting the purchase.

As discussed above, if the balance of the prepaid amount in the e-Wallet 24 owned by the user is larger than a purchase amount or if the total of the balance and a crediting amount is larger than the purchase amount even through the balance is smaller than the purchase amount, then the OK telegraphic message is transmitted (step S59 shown in Fig. 7, Fig. 8, and Fig. 9).

When the OK telegraphic message is received, the CPU 141 proceeds to step S29 where it generates a message saying "Thank you for buying the commodity. The commodity will be immediately sent to you," and causes the generated message to be transmitted from the communication unit 149 to the user terminal 2. The CPU 141 also asks a predetermined distribution center through the intermediary of the communication unit 149 to deliver the corresponding commodity.

Thereafter, in step S30, the CPU 141 receives the remittance of the amount corresponding to the purchase amount from the settlement apparatus 7 on a preset day. More accurately, the settlement apparatus 7 moves the electronic money equivalent to the purchase amount from the account of the user into the account of the affiliated store terminal 4 (step S61 shown in Fig. 7, Fig. 8, and Fig. 9), so that the CPU 141 receives the remittance of that amount.

To be more specific, the amount that the affiliated store terminal 4 is able to receive is obviously the amount obtained after the commission for the settlement by the settlement apparatus 7 has been subtracted.

The purchase amount includes a consumption tax.

Meanwhile, if it is determined in step S28 that the received telegraphic message is not the OK telegraphic message (if it is determined that the message is the NG telegraphic message generated by the processing in step S70 shown in Fig. 7 and Fig. 10), then the CPU 141 proceeds to step S31 where it carries out the processing for rejecting the sale. More specifically, the CPU 141 generates a message saying "The balance of the e-Wallet is not enough to buy the commodity," or the like, and transmits the generated message to the user terminal 2.

Referring now to the flowchart of Fig. 7, the descriptions will be given of the processing of the settlement apparatus 7 carried out in relation to the processing of the user terminal 2 of Fig. 5 and the affiliated store terminal 4 of Fig. 6.

In step S51, when a CPU 41 of the settlement apparatus 7 receives a balance inquiry (the inquiry based on the processing in step S28 shown in Fig. 6 and Fig. 8) from the affiliated store terminal 4, it reads the data on the input screen of a password for checking a user that has been stored in the storage 48 and causes the data to be transmitted to the user terminal 2 in step S52.

The user enters his or her password and membership number in the input screen to transmit them (step S10 shown in Fig. 5 and Fig. 8).

Upon receipt of the password and membership number from the user terminal 2 in step S53, the CPU 41 determines in step S54 whether the password and membership number coincide with the password and membership number stored in a client database 13 of the storage 48, and authenticates the user (approves the validity of the user) if they coincide.

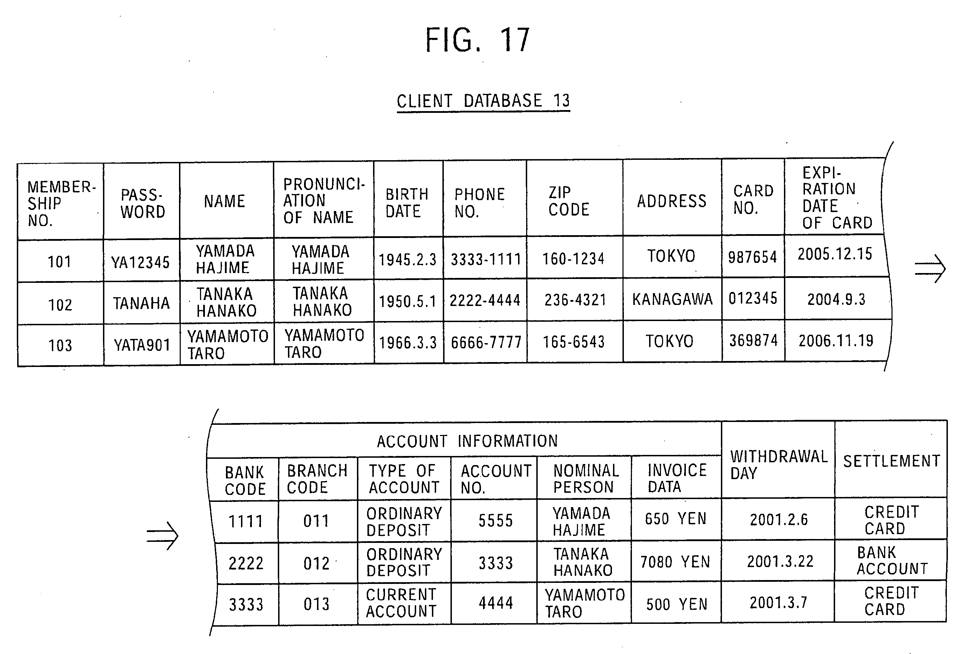

More specifically, as shown in Fig. 17, the client database 13 stores the information regarding the users, such as the membership numbers, passwords, names, the pronunciations of the names, dates of birth, telephone numbers, zip codes, addresses, card numbers, the valid date of the cards of the users, the information regarding the bank codes of the bank accounts owned by the users, the branch codes of the banks, the types of accounts, account numbers, nominal persons, invoicing data, the information regarding withdrawal dates, or the like, or the information regarding whether credit cards or bank accounts are used for settlement.

In the example shown in Fig. 17, the client information on members having membership numbers 101, 102, and 103, respectively. For instance, if received membership numbers and passwords are "101" and "YA12345," then the user will be authenticated.

If the result of the authentication processing based on the password and membership number indicates the validity of the user, then the CPU 41 reads the electronic money balance of the user from the database 25, and transmits the balance to the user terminal 2 in step S55.

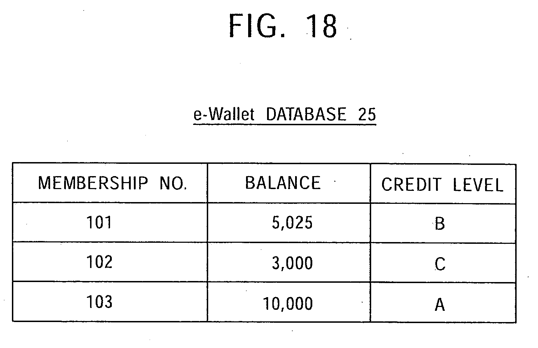

Stored in the database 25 are the membership numbers, balances, and credit levels of the members (the users of the user terminal 2) registered in the client database 13, as shown in Fig. 18.

In the case of the example shown in Fig. 18, the balance and the credit level of the user of membership number 101 are 5025 yen and B, respectively. The balance and the credit level of the user of membership number 102 are 3000 yen and C, respectively. The balance and the credit level of the user of membership number 103 are 10000 yen and A, respectively.

As described in conjunction with Fig. 15, the information transmitted by the processing in step S55 includes the current balance of the user (5025 yen) and the purchase amount (6000 yen). Based on this information, the user notifies his or her final decision on whether he or she is purchasing the commodity (step S13 shown in Fig. 5 and Fig. 8).

In step S56, the CPU 41 determines whether the application for purchase has been received from the user terminal 2, and terminates the processing if no application for purchase has been received.

If the application for purchase has been received, the CPU 41 proceeds to step S57 where it determines whether the balance read by the processing in step S55 is equal to or larger than the purchase amount accepted by the processing in step S51.

For instance, it is assumed that the user of membership, number 103 purchases a commodity priced at 6000 yen. In this case, the balance (10000 yen)(Fig. 18) is larger than the purchase amount (6000 yen), so that the CPU 41 proceeds to step S58 where it records the value 4000 yen, which is obtained by subtracting the purchase amount 6000 yen from the balance 10000 yen of the user of membership number 103, as the updated balance of the user of membership number 103 (the balance 10000 yen shown in Fig. 18 is updated to the balance 4000 yen).

In step S59, the CPU 41 generates the OK telegraphic message (the telegraphic message indicating that the settlement has been properly performed), and controls the communication unit 49 to transmit the generated telegraphic message to the affiliated store terminal 2 through the intermediary of the Internet 1.

In step S60, the CPU 41 enters the purchase amount (6000 yen) as invoicing data in the column of the user invoicing data in the client database 13 to store it.

Thereafter, in step S61, the CPU 41 moves the user's electronic money stored as the invoicing data into the account of the affiliated store terminal 4. The account of the affiliated store terminal 4 is provided in the database 25 (or may of course be provided outside the settlement apparatus 7).

Meanwhile, if, for example, the user of membership number 101 buys a commodity of a 6000 yen purchase amount, then the balance of the user will be 5025 yen (Fig. 18), so that the balance (5025 yen) is determined to be smaller than the purchase amount (6000 yen) in step S57. In this case, the CPU 41 proceeds to step S62 where it determines whether to carry out credit processing by itself. If the CPU 41 decides not to carry out the credit processing by itself, then the CPU 41 proceeds to step S63 where it asks a credit server (e.g., a card company management apparatus 5 of a credit card company issuing a credit card of the user) to perform crediting through the intermediary of the communication unit 49. The card company management apparatus 5 carries out the credit processing on the basis of the request for crediting, and provides the notification of the result.

In step S64, the CPU 41 receives the crediting result from the card company management apparatus 5. The crediting result includes a crediting level, and the CPU 41 carries out the processing in step S66 thereafter on the basis of the crediting level.

Meanwhile, if the CPU 41 decides in step S62 that it will carry out the credit processing by itself, then it proceeds to step S65 where it reads the overdraft amount of the user from a table 26 of crediting levels.

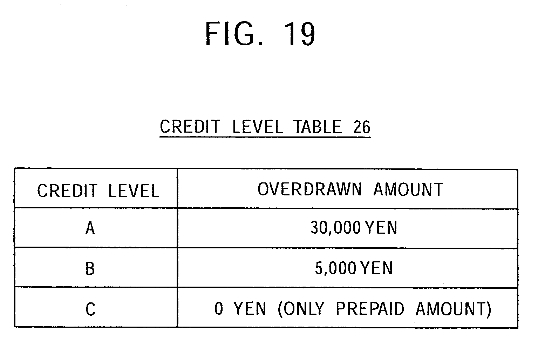

More specifically, as shown in Fig. 19, the table 26 of crediting levels shows overdraft amounts associated with the crediting levels of users (Fig. 18). In the case of the example shown in Fig. 19, the overdraft amount for the user of crediting level A is specified as 30000 yen, the overdraft amount for the user of crediting level B is specified as 5000 yen, the overdraft amount for the user of crediting level C is specified as 0 yen (i.e., only prepaid being applicable).

As shown in Fig. 18, the crediting level of the user of membership number 101 is B.

Hence, the overdraft amount of the user will be 5000 yen according to Fig. 19.

In step S66, the CPU 41 determines whether the overdraft amount read in step S65 is zero yen, that is, whether the user is unqualified for the overdraft. If the overdraft amount is not zero yen, then the CPU 41 proceeds to step S67 where it performs computation to add the overdraft amount to the balance. The overdraft amount will be 5000 yen on the basis of crediting level B of the user of membership number 101, so that the total value of the overdraft amount and the balance in this case will be 10025 yen (= 5025 + 5000).

In step S68, the CPU 41 determines whether the total value of the overdraft amount and the balance computed in step S67 is equal to or larger than the purchase amount. If the total value of the overdraft amount and the balance is equal to or larger than the purchase amount, then the CPU 41 proceeds to step S69 where it stores the overdraft amount decided by the processing in step S67 as its own sales to the user. The stored amount is withdrawn from an account (credit card, an account at a financial institution, etc.) specified by the user at a predetermined timing (a predetermined withdrawal date in the case of a credit card or immediately in the case of an account at a financial institution handling debit settlement).

The processing in step S69 may be inserted between steps S66 and S67 or between steps S67 and S68. In this case, an overdraft is made for the user even if the user cancels the purchasing processing in the middle and eventually decides not to purchase a commodity.

After that, the CPU 41 returns to step S58 to carry out the processing thereafter.

More specifically, the CPU 41 uses the value obtained by subtracting the purchase amount from the balance to update the balance in step S58. As a result, the balance will be 4025 yen in this case. In step S59, the OK telegraphic message is generated and transmitted to the affiliated store terminal 4.

In step S60, the CPU 41 stores the purchase amount (6000 yen in the case of this example) as the invoicing data in the invoicing data column of the client database 13 of the user.

Subsequently, in the step S61, the electronic money based on the invoicing data is moved into the account of the affiliated store terminal 4 in the same manner as described above.

If it is determined in step S66 that the overdraft amount is zero yen and if it is determined in step S68 that the total of the overdraft amount and the balance is smaller than the purchase amount, then the CPU 41 proceeds to step S70 where the CPU 41 generates the NG telegraphic message and transmits the generated message to the affiliated store terminal 4.

For example, if the user of membership number 102 intends to buy a commodity priced at 6000 yen, then it will be determined to be NO (insufficient balance) in step S57 since the balance of the user is 3000 yen (Fig. 18). And the crediting level of the user of membership number 102 is C (Fig. 18), so that the overdraft amount will be zero (Fig. 19).

In this case, therefore, it will be determined to be YES in step S66, and the processing of step S70 will be carried out.

Furthermore, if, for example, the user of membership number 101 intends to buy a commodity priced at 20000 yen, then it will be determined to be NO in step S68 and the processing of step S70 will be carried out since the total of the overdraft amount and the balance is 10025 yen, whereas the purchase amount is 20000 yen.

More specifically, the CPU 41 generates the NG telegraphic message saying "The amount of the e-Wallet is not enough to buy the commodity," and transmits the message to the affiliated store terminal 4.

Accordingly, in this case, the processing for rejecting the sale will be carried out at the affiliated store terminal 4 (step S31 shown in Fig. 6 and Fig. 10), as mentioned above, preventing the user from buying the commodity.

The crediting levels of individual users are preset and registers beforehand by investigating the credibility of the individual users in advance at predetermined intervals.

In the above descriptions, the affiliated store terminal 4 inquires the settlement apparatus 7 of balances. It is alternatively possible to arrange such that the user terminal 2 directly inquires the settlement apparatus 7 of balances.

The series of processing described above can be carried out by hardware or by software. To carry out the series of processing by software, a computer having dedicated hardware that incorporates a program constituting the software may be used or the program constituting the software may be installed from a network or a recording medium into, for example, a general-purpose personal computer or the like so as to implement diverse functions.

As shown in Fig. 2 through Fig. 4, the recording medium is constructed of a package medium that is distributed to provide users with programs separately from a main unit of an apparatus, and is formed of a magnetic disk 71, 171, or 271 (including a floppy disk), an optical disc 72, 172, or 272 (including CD-ROM (Compact Disk-Read Only Memory) and DVD (digital Versatile Disk)), magneto-optical disk 73, 173, or 273 (including MD (Mini-Disk)), or a semiconductor memory 74, 174, or 274, or a ROM 42, 142, or 242 in which the program has been recorded, or the hard disk or the like included in a storage 48, 148, or 248 which is supplied to users in a state where it is preinstalled in the main unit of the apparatus.

In the present description, the steps describing the program recorded in a recording medium includes the processing carried out in a time series manner in the sequence of description, and also the processing carried out in parallel or individually although it may not be necessarily carried out in time series.

In the present description, the system represents the entire apparatus constructed of a plurality of apparatuses. The commodities include not only ordinary tangible articles but also the contents of audio or video articles and various types of services. Moreover, the present invention can be applied also in a system for purchasing commodities through the intermediary of a network besides the Internet 1.

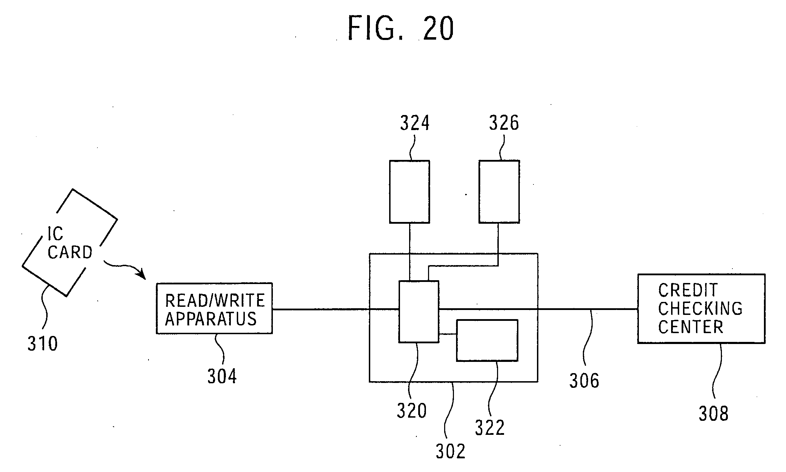

Second through fifth embodiments will now be explained in conjunction with Fig. 20 through Fig. 28.

### (Second Embodiment)

An IC card equipped with an electronic money card function and an electronic money crediting system in accordance with the second embodiment of the present invention will be explained in conjunction with Fig. 20 through Fig. 24. First, the schematic configuration of an electronic money crediting system 301 in accordance with the present embodiment will be explained in conjunction with Fig. 20. The electronic money crediting system 301 has a POS (point-of-sales information management) terminal 302 installed in a stored selling commodities. The POS terminal 302 can be connected to a credit checking center 308 via a dedicated communication line (dedicated line) 306. Connected to the POS terminal 302 is a read/write apparatus 304 for reading or writing various types of data from or to a storage in a multi-functional integral IC card 310.

The POS terminal 302 has an electronic, cash register and optical reader (not shown) that make it possible to collect various types of data for each sale of commodities and to tabulate data for each predetermined object so as to permit commodity inventory control, sales management, etc., and it also has a display device 324 and a printer 326 to deliver warning or requests to customers.

Furthermore, the POS terminal 302 has a controller 320 that supervise and controls the entire apparatus and carries out diverse types of arithmetic processing, and a storage 322 for storing a variety of types of data. The controller 320 stores, in the storage 322, various types of data on the multi-functional integral type IC card 310 received from the read/write apparatus 304, and take out predetermined data from the storage 322 to perform arithmetic operation. Predetermined data together with a credit checking request is sent out to the credit checking center 308 to perform credit checking of a credit card incidental to the multi-functional integral IC card 310 of a person who wishes to buy a commodity.

In response to a request for authentication from the POS terminal 302, the credit checking center 308 accesses an authentication database installed at each credit card company to prepare credit acceptance/rejection data, and sends out a credit checking result of the credit card to the POS terminal 302. Each credit card company may function also as the credit checking center 308.

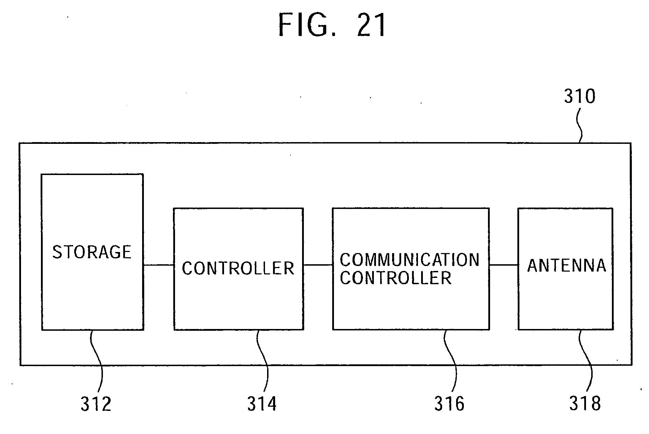

Fig. 21 shows the schematic configuration of a multi-functional integral IC card (hereinafter referred to simply as "integral IC card" as appropriate) 310. The multi-functional integral IC card 310 according to the embodiment has an electronic money card function and a credit card function. The multi-functional integral IC card 310 has a storage 312 formed of a semiconductor memory, such as a flash EEPROM or the like, a communication controller 316 and an antenna 318 for communicating with external equipment to exchange data, and a controller 314 for supervising and controlling these component units.

When the multi-functional integral IC card 310 is held over the read/write apparatus 304, electromagnetic wave data is exchanged between the antenna 318 of the multi-functional integral IC card 310 and an antenna, which is not shown, in the read/write apparatus 304.

Stored in the storage 312 in the integral IC card 310 are "integral display data" indicating that the card is a multi-functional integral type and "data indicating each type of function" showing that the card has both the function of an electronic money card and the function of a credit card.

Furthermore, "electronic money balance R1" is stored in the storage 312. In addition, the storage 312 stores "acceptance data" that indicates whether automatic crediting is acceptable under a predetermined condition so as to prevent an electronic money balance from becoming negative at the time of purchasing a commodity. The automatic crediting in this case means to increase the electronic money balance in the integral IC card by charging electronic money in a manner similar to overdraft from the POS terminal 302 at a store where a commodity is purchased rather than increasing the electronic money balance by receiving money from a crediting machine. The "acceptance data" is represented by one of, for example, "0," "3000," "5000," or "10000" where "0" means automatic crediting is not accepted, and "3000," "5000," or "10000" means that automatic crediting is accepted, each figure indicating a crediting amount.

Further stored in the storage 312 are recorded use log data regarding a plurality of most recent uses that includes the information on the date and time of when a card was used and the place (e.g., an affiliated store number) where the card was used, and the type of use (whether electronic money was used or a credit card was used), and recorded crediting log data regarding a plurality of most recent crediting cases that includes the information on the date and time of crediting and the place of crediting (e.g., a crediting machine number). The storage 312 further stores the number of a credit card, which is a unique settlement number, the valid date of the card, etc. Hereinafter, the foregoing information stored in the storage 312 will be referred to as "card information" throughout the description.

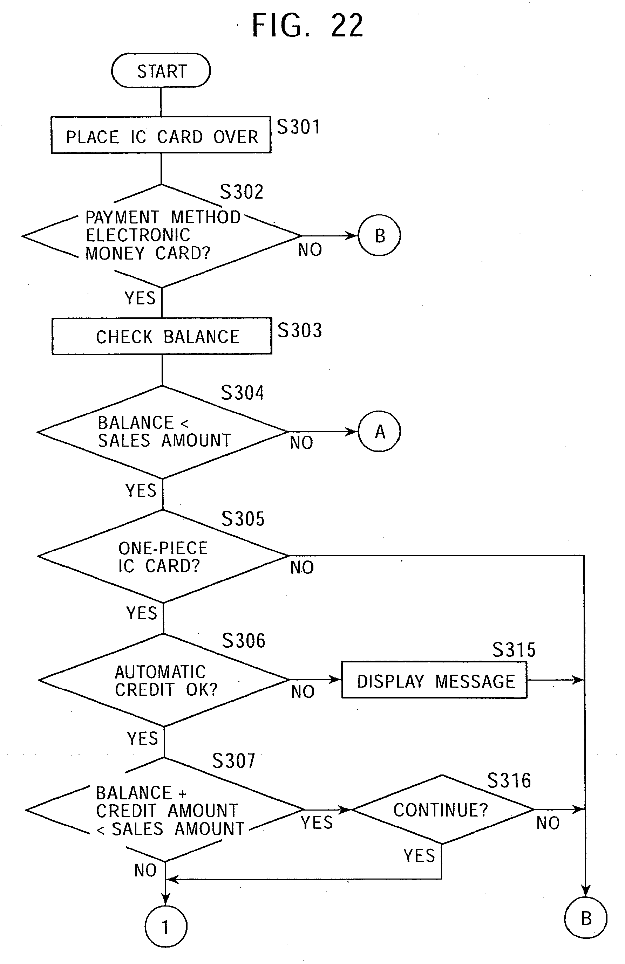

Referring to Fig. 20 and Fig. 21, the operation procedure in the electronic money crediting system 301 having the construction described above will be explained in conjunction with Fig. 22 through Fig. 24. First, a person who wishes to buy a commodity applies to a store for the purchase of the desired commodity, and holds the integral IC card 310 over the read/write apparatus 304 (step S301).

When the integral IC. card 310 is brought close to the read/write apparatus 304, it wirelessly transmits the foregoing card information through the intermediary of the antenna 318.

The read/write apparatus 304 receives the aforesaid card information and outputs it to the POS terminal 302. The controller 320 of the POS terminal 302 stores the card information in the storage 322 and determines whether the card has the electronic money card function on the basis of the function type indicating data among the card information (step S302).

If the card does not have the electronic money card function, then the operation of the electronic money crediting system 301 is terminated. If the card has the electronic money card function, then the controller 320 of the POS terminal 302 takes out the data on the electronic money balance R1 from the card information stored in the storage 322 (step S303).

The controller 320 of the POS terminal 302 decides whether the electronic money balance R1 that has been taken out is smaller than the sales amount S of the commodity (the purchase amount from the viewpoint of the person wishing to buy)(step S304). If the electronic money balance R1 exceeds the sales amount S, then the controller 320 proceeds to step S312 to calculate (electronic money balance R1 - sales amount S = balance R2). The balance R2 is shown on a display device 324 of the POS terminal 302 for the purpose of checking the balance.

The controller 320 of the POS terminal 302 overwrites the data on the electronic money balance among the card information in the storage 322 with the balance R2 (step S313) and overwrites most up-to-date data of the use log with this commodity purchase data, then transmits the card information in the storage 322 to the integral IC card 310 through the intermediary of the read/write apparatus 304 (step S314). The controller 314 of the integral IC card 310 stores the received card information in the storage 312, and updates various types of data including the electronic money balance.

The operation described above takes only a few seconds at the latest, and it is completed while the person interested in buying a commodity is holding the integral IC card 310 in step S301. Timeout processing may be provided such that, if the operation is delayed for some reason, a prompt is displayed on the display device 324 or the like of the POS terminal 302 to urge the person to hold the integral IC card 310 over the read/write apparatus 304 again.

The descriptions will now be given of a case where it is determined in step S304 that the electronic money balance R1 is smaller than the commodity sales amount S. In this case, the controller 320 of the POS terminal 302 proceeds to step S305 to take out the integral display data from the card information in the storage 322 so as to determine whether the card is the integral card.

If the card is not the integral card, then the operation of the electronic money crediting system 301 is terminated. If the card is the integral card, then the controller 320 of the POS terminal 302 takes out the acceptance data from the card information stored in the storage 322 to determine whether the automatic crediting is accepted (step S306). If the acceptance data is "0" (meaning that the automatic crediting is not accepted), then the controller proceeds to step S315 to display a message saying "The electronic money balance is insufficient, but automatic crediting is not accepted. Therefore, the shortfall has to be covered by cash or other means." on the display device 324, then terminates the operation of the electronic money crediting system 301.

If the acceptance data is other than "0" (meaning that automatic crediting is accepted), then the controller proceeds to step S307. If, for example, the acceptance data is "5000," then it is determined in step S307 whether the total of the electronic money balance R1 and an automatic crediting amount D = 5000 yen is smaller than the sales amount S.

If the total of the purchase electronic money balance R1 and the automatic crediting amount D exceeds the sales amount S, then the controller 320 of the POS terminal 302 proceeds to step S308 to send out a request for checking credit to the credit checking center 308 via a dedicated line 306.

If the total of the purchase electronic money balance R1 and the automatic crediting amount D is smaller than the sales amount S, then the controller proceeds to step S316 to cause the display device 324 of the POS terminal 302 to display an inquiry to ask the person interested in buying a commodity whether the procedure for automatic crediting should be continued. If the person does not wish to continue the procedure, then the controller 320 of the POS terminal 302 terminates the operation of the electronic money crediting system 301. If the person wishes to continue the procedure, then the controller 320 proceeds to step S308 to send out a request for checking credit to the credit checking center 308 via the dedicated line 306.

In the request for checking credit; the controller 320 of the POS terminal 302 transmits a credit card number, a valid date, and acceptance data, and also transmits an international security code entered by a user through a keypad, as necessary.

The credit checking center 308 selects the credit card company issuing the card on the basis of the received credit card number, and accesses the authentication database of the card company to prepare credit acceptance/rejection data. The prepared credit acceptance/rejection data is received by the POS terminal 302 (step S309).

The controller 320 of the POS terminal 302 that has received the credit acceptance/rejection data moves to the determination of credit limit (step S310), and if it decides that credit cannot be approved, then it terminates the processing to cancel the transaction or asks the person interested in buying a commodity about the payment by cash or another method.

If the controller 320 of the POS terminal 302 determines that credit can be approved, then it calculates (electronic money balance R1 + automatic crediting amount D = electronic money balance R3), and stores the electronic money balance R3 as electronic money balance data (step S311). Subsequently, (electronic money balance R3 - sales amount S = balance R4) is calculated. The balance R4 is displayed on the display device 324 of the POS terminal 302 for the check of the balance (step S312).

At this time, if the controller 320 has proceeded from step S316 to step S308, then it calculates (electronic money balance R3 + "difference" - sales amount S = balance R4 = 0) so as set the balance R4 to "zero," and displays a message indicating that the "difference" has to be compensated for by cash or another means.

When the electronic money balance is checked in step S312, the controller 320 of the POS terminal 302 proceeds to step S313 to overwrite the electronic money balance among the card information in the storage 322 with the balance R4, and overwrites the most up-to-date data of the use log with the commodity purchase data, then transmits the card information in the storage 322 to the integral IC card 310 through the intermediary of the read/write apparatus 304 (step S314). The controller 314 of the integral IC card 310 stores the received card information in the storage 312 and updates various types of data, including the electronic money balance.

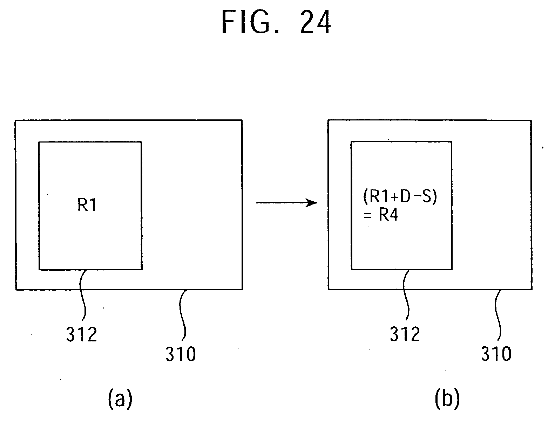

Fig. 24 is a schematic diagram showing the transition in the electronic money balance stored in the storage 312 in the integral IC card 310 in the above operation. The electronic money balance before the automatic crediting in step S311 is "R1" (Fig. 24 (a)), and changes to the balance "R4" as a result of the procedure from step S311 through S314 (Fig. 24(b)).

The crediting amount "5000 yen" deposited in the integral IC card 310 by carrying out the subtraction processing in step S313 is handled as a credit sale of the multi-functional integral IC card 310 combining the electronic money card function and the credit card function. The credit sale and the credit card number are transmitted as invoicing information to the credit card company from the POS terminal 302. The credit card company subtracts an affiliated store commission and implements the payment, then sends an invoice to the person who owns the credit card.

If the integral IC card 310 is not held over the read/write apparatus 304 in step S314, then a prompt may be displayed on the display device 324 of the like of the POS terminal 302 to urge a card owner to hold the integral IC card 310 over the read/write apparatus 304 again.

Thus, according to the embodiment, money is automatically charged into the multi-functional integral IC card with the electronic money function, so that even when the balance of the electronic money becomes low, it is no longer necessary to go all the way to a dedicated crediting machine to implement crediting so as to charge electronic money. Furthermore, since electronic money is charged, shopping based on the electronic money can be continued without going to the crediting machine thereafter.

Hence, users of the multi-functional integral IC cards can enjoy the advantage that enables them to reduce the need for compensating the shortage of an electronic money balance by cash and to purchase commodity cashlessly and securely. Moreover, since it is not necessary to go all the way to a dedicated crediting machine, it is possible to perform commercial transactions based on effortless electronic money.

### (Third Embodiment)

The descriptions will now be given of an IC card equipped with an electronic money card function and an electronic money crediting system according to a third embodiment of the present invention.

In the second embodiment, the online connection with the credit checking center 308 is made each time the automatic crediting is performed. This embodiment is characterized in that credit is checked in an offline mode on the basis of a credit list distributed from a credit checking center 308 on a regular or irregular basis.

The schematic configuration of an electronic money crediting system 301 in accordance with this embodiment and the configuration of an integral IC card 310 are identical to those shown in Fig 20 and Fig. 21 used in the second embodiment. A dedicated line 306, however, is for receiving a credit list periodically distributed rather than for checking credit in the online mode. The credit list shows the credit card numbers for which credit is not acceptable. Upon receipt of the credit list, a controller 320 of a POS terminal 302 stores the credit list in a predetermined region in a storage 322.

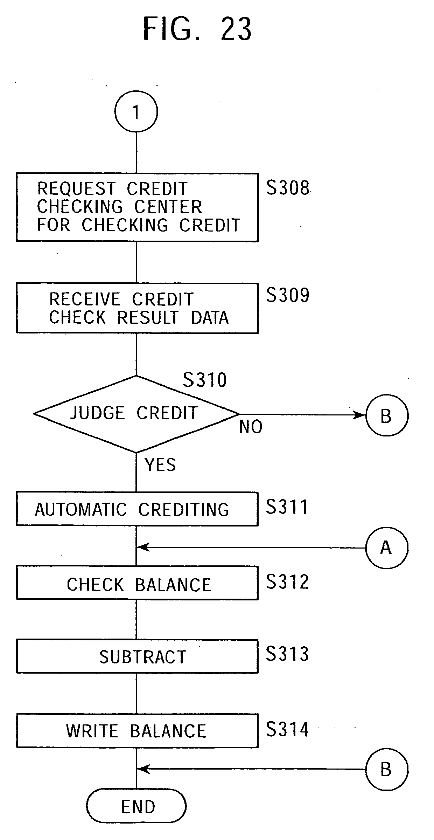

The operation procedure in the electronic money crediting system 301 in accordance with the present embodiment is the same as that shown in Fig. 22 and Fig. 23 explained in the second embodiment except that steps S308 and S309 shown in Fig. 23 are omitted and the controller proceeds directly from step S307 or S316 shown in Fig. 22 to step S310 to determine credit on the basis of a credit list stored in the storage 322.

According to this embodiment, automatic crediting can be completed in a shorter time in addition to the advantage obtained by the second embodiment in which even if an electronic money balance is smaller than a selling price of a commodity desired to be purchased, electronic money can be easily received. Thus, customer service can be further improved.

### (Fourth Embodiment)

The descriptions will now be given of an IC card equipped with an electronic money card function and an electronic money crediting system according to a fourth embodiment of the present invention.

In the second embodiment, the online connection with the credit checking center 308 is made each time the automatic crediting is performed. In the third embodiment, credit is checked in an offline mode on the basis of a credit list distributed from the credit checking center 308 on a regular basis. In comparison with the embodiments, the present embodiment is characterized in that whether credit is approvable is determined on the basis of the card information stored in an integral IC card 310.

The schematic configuration of an electronic money crediting system 301 in accordance with this embodiment and the configuration of an integral IC card 310 are identical to those shown in Fig 20 and Fig. 21 used in the second embodiment. A dedicated line 306, however, is connected to the credit checking center 308 for other information communication rather than for checking credit or for distribution of credit lists. Therefore, in this embodiment, it is possible to sever the dedicated line 306 and the credit checking center 308 from a POS terminal 302.

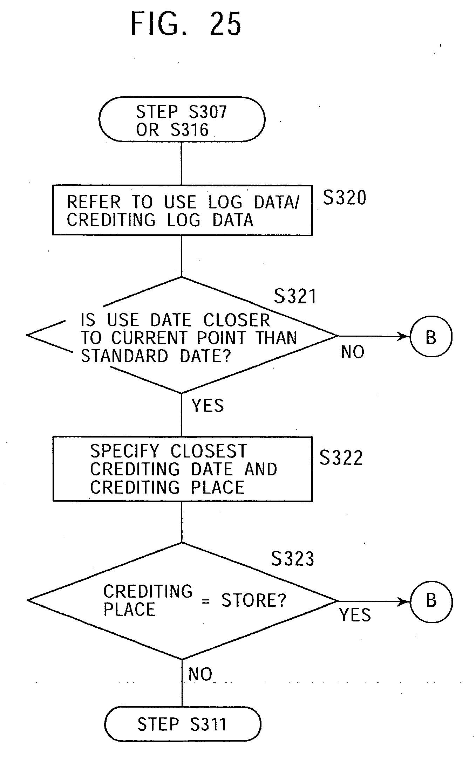

The operation procedure of the electronic money crediting system 301 in accordance with the present embodiment will be explained in conjunction with Fig. 22, Fig. 23, and Fig. 25. Fig. 25 shows the operation procedure that has replaced steps S308 through S310 following step S307 or step S316. The remaining operation steps are the same as those of the operation procedure shown in Fig. 22 and Fig. 23 explained in the second embodiment.

First, the controller 320 of the POS terminal 302 proceeds to automatic crediting via step S307 or step S316 shown in Fig. 22, and refers, in step S320 shown in Fig. 25, to the use log data and crediting log data among the card information of the integral IC card 310 stored in a storage 322.

The use log data is utilized as crediting acceptance/rejection data. As previously described, the use log data is the recorded data regarding a plurality of most recent uses that includes the information on the date and time of use of a card and the place where the card is used, and the type of use indicating whether the card was used as an electronic money card or as a credit card.

The controller 320 of the POS terminal 302 specifies, among the use log data, the most recent date and time of use indicating that the card was used as a credit card. The controller 320 determines whether the date and time of use is closer to the current point than a preset reference date and time (e.g., the point that is a few weeks before the current point, or the point that is a few days before the current point)(step S321). If the date and time of use is closer to the current point than the reference date and time, then the crediting is approved. If the reference date and time is closer to the current point than the date and time of use, then crediting is not approved.

The presence of the use history of the credit card means that crediting of the credit card has been approved at that point of use. Accordingly, if the point of use is closer to the current point than the reference date and time, then it is judged that the probability of the crediting being still approved at this point is high, and the crediting is approved. If the reference date and time is closer to the current point than the point of use, then it is judged that the possibility of the crediting being not approvable at this point is high, and the crediting is not approved.

If the crediting is not approved in step S321, then it terminates the processing to cancel the transaction or asks the person interested in buying a commodity about the payment by cash or another method.

If it is determined in step S321 that the crediting is approvable, then the controller 320 of the POS terminal 302 specifies the information on the most recent crediting date and time and place of crediting among the crediting log data (step 5322) . This is because, according to the conditions of use of the automatic crediting system of this embodiment, automatic crediting cannot be implemented in succession, so that it is required to identify whether the previous crediting has been effected by automatic crediting. Based on this, the controller 320 of the POS terminal 302 determines whether the specified most recent crediting location is a store (including a virtual store)(step S323).

When it has been confirmed that the crediting location is a store, the controller 320 of the POS terminal 302 determines that the most recent crediting is the automatic crediting from a store, and terminates the processing to cancel the transaction or asks the person interested in buying a commodity about the payment by cash or another method. If it has been confirmed that the crediting location is not a store, then the controller 320 proceeds to step S311 shown in Fig. 23 to carry out automatic crediting. The processing procedure thereafter is the same as that shown in Fig. 23.

According to this embodiment, in addition to the advantage obtained by the second embodiment in which even if an electronic money balance is smaller than a selling price of a commodity desired to be purchased, electronic money can be easily received, automatic crediting can be completed in an extremely short time because of the obviation of the credit checking step based on the online connection to the credit checking center 308 and the checking operation based on the credit list distributed in the offline mode, permitting customer service to be further improved. The present embodiment is also advantageous in that the efforts for creating the online checking system with the credit checking center 308 connected via the dedicated line 306 or for creating a system for distributing credit lists, thus permitting an operation at lower cost to be achieved.

### (Fifth Embodiment)

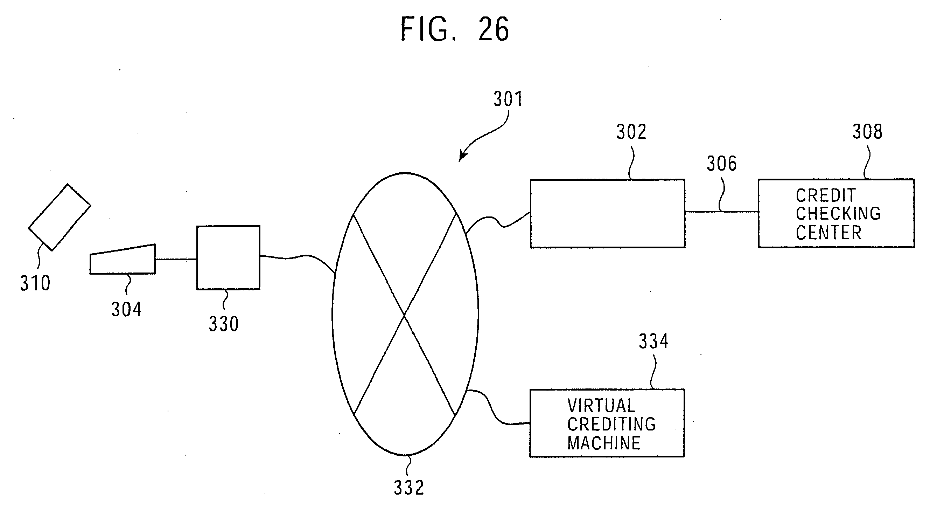

An IC card with an electronic money card function and an electronic money crediting system in accordance with a fifth embodiment of the present invention will be explained in conjunction with Fig. 26 through Fig. 28. First, the schematic configuration of the electronic money crediting system according to the embodiment will be explained with reference to Fig. 26. Fig. 26 shows a network configuration in this embodiment. The component units providing the same functions/operations as those of the component units described in the above embodiments will be assigned the same reference numerals, and repetitious descriptions will be omitted. In the following explanation in this embodiment, for the purpose of convenience, a settlement server will be a POS terminal 302.

As shown in Fig. 26, an electronic money crediting system 301 in accordance with the present embodiment involves the POS terminal 302 connected to a communication network 332 and installed at a virtual store located in a virtual shop town, a virtual crediting machine 334 installed in the virtual shop town, and a communication terminal 330 of a person interested in buying commodities that allows the person to access the POS terminal 302 of a virtual store or the virtual crediting machine 334 to purchase commodities by an integral IC card 310 or to update his or her electronic money balance. Connected to the communication terminal 330 is a read/write apparatus 304 adapted to wirelessly communicate with the integral IC card 310 to exchange data.

A communication network 332 is a domestic communication network or an international value-added communication network (VAN) or a network combining them. The Internet is an example that combines a domestic communication network and the international value-added communication network. Furthermore, the communication network 332 includes, for example, a packet communication network used for data transfer by cellular phones or the like, and a communication , network that includes a digital public telephone line, such as ISDN, as a component of the network. The communication network 332 according to this embodiment also includes a communication network in which a digital television broadcast network (including both wireless versions or wired versions, such as cable televisions) and a public telephone line or the like are linked. Thus, the communication network 332 according to this embodiment has an extended concept that includes a variety of types of communication broadcast networks and mixtures thereof.

For instance, if the communication network 332 is the Internet, then a person interested in buying commodities connects, as his or her communication terminal, his or her workstation or PC having a function for exchanging electronic mail and a browser function to the communication network 332 through a dedicated line or a public circuit. The browser has a function for accessing a predetermined URL (uniform resource locator) on the Internet to display a website. The person interested in buying commodities can access virtual stores on the Internet through the intermediary of the browser to acquire information on commodities or transmit an intention to buy or the information on his or her credit card.

A virtual store has the POS terminal 302 for processing various demands (requests) related to the purchase of commodities from persons interested in buying commodities, allowing the virtual store to provide information on commodities to the persons interested in buying commodities or exchange data with the persons interested in buying commodities to proceed with the procedure for purchasing commodities through the intermediary of the Internet. The POS terminal 302 at the virtual store is connected to a credit checking center 308 via the dedicated line 306 distinguished from the communication network 332.

If, for example, the communication network 332 is a network including a packet communication network, then a person interested in buying commodities can use a portable telephone equipped with a function for exchanging electronic mail and a browser function to connect to a communication center through the intermediary of the packet communication network. This will connect to the Internet through the communication center to enable the person to access virtual stores and purchase commodities.

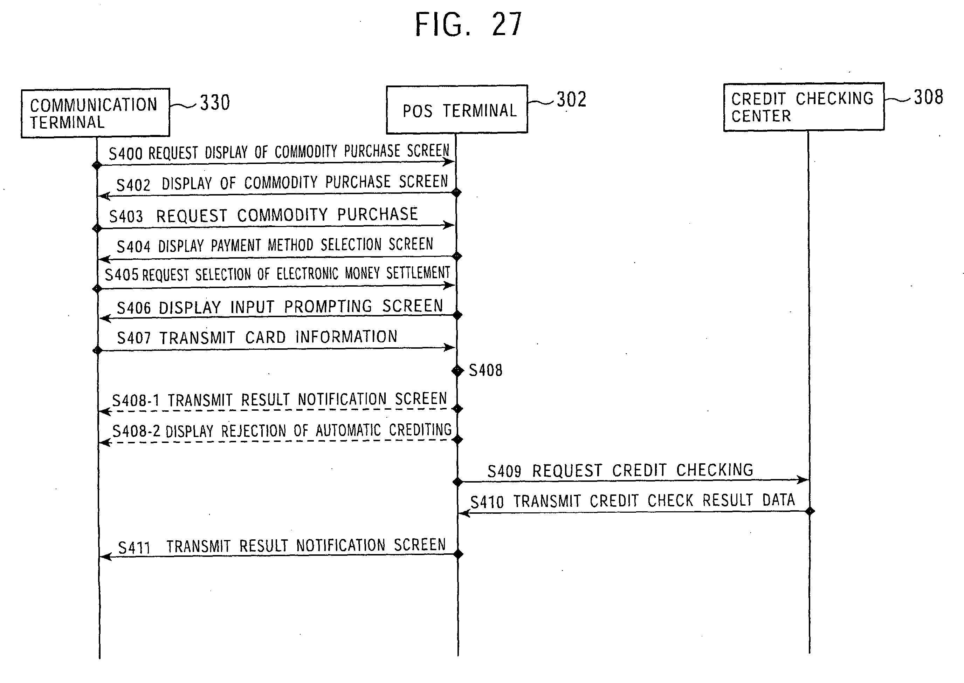

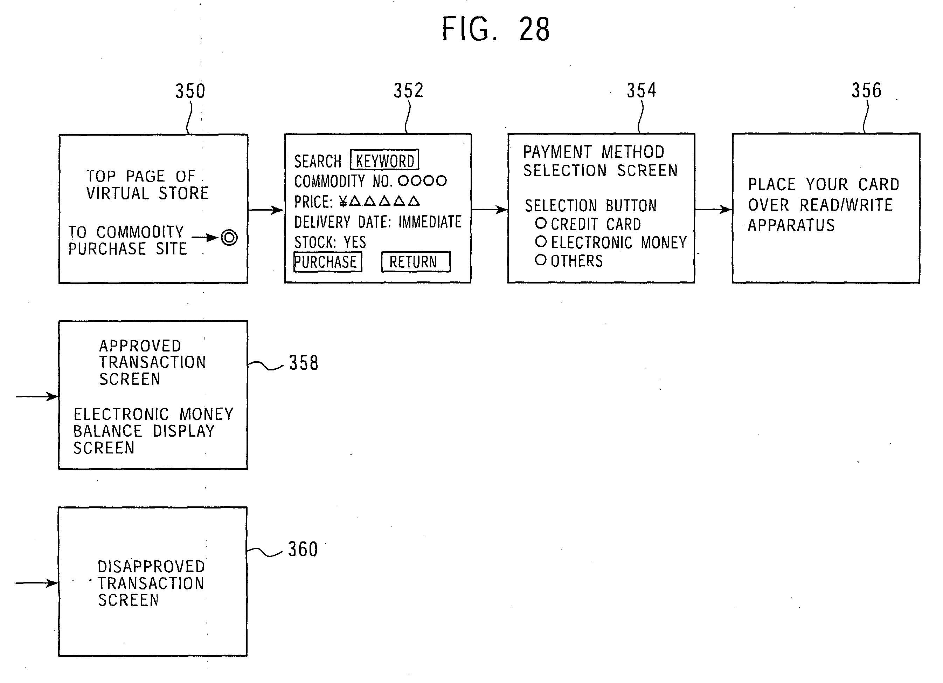

The operation procedure in the electronic money crediting system 301 having the aforesaid configuration will be explained with reference to Fig. 20 through Fig. 26 and also to Fig. 27 and Fig. 28. The descriptions will be given using an example wherein a person interested in buying commodities operates the communication terminal 330 to connect it to the POS terminal 302 of a virtual store providing a website for electronic commercial transactions on the communication network 332 (the Internet). Fig. 27 illustrates, in time series, the procedure for an electronic commercial transaction between the communication terminal 330 of the person interested in buying commodities and the POS terminal 302 of a virtual store in the electronic money crediting system 301 according to this embodiment. Fig. 28 shows the examples of screens in the website of a virtual store displayed by the browser of the communication terminal 330 of the person interested in buying commodities in the procedure of operations.

First, the person interesting in buying causes the communication terminal 330 to display a web browser, and enters a predetermined URL addressed to a virtual store so as to cause a top page 350 of the virtual store to be displayed, as shown in Fig. 28, through the intermediary of the communication network 332. Then, the person interested in buying commodities places the pointer of a mouse on, for example, a "commodity purchase site" button displayed on the top page 350 and clicks the button to send out a request for displaying a commodity purchase screen (step S400).

Upon receipt of the request for displaying the commodity purchase screen, the POS terminal 302 displays a commodity purchase screen 352, as shown in Fig. 28, on the browser of the communication terminal 330 (step S402). When the person interested in buying commodities enters a search keyword of a desired commodity through the commodity purchase screen 352 on the communication terminal 330, the POS terminal 302 searches in a commodity database, which is not shown, on the basis of the search keyword entered by the person interested in buying commodities, and displays the search result on the commodity purchase screen 352.

If the person interested in buying commodities finds a desired commodity on the commodity purchase screen 352 displayed on the browser of the communication terminal 330, then he or she brings the pointer of the mouse to "PURCHASE" on the commodity purchase screen 352 and clicks it so as to send out a request for buying the commodity (step S403).

Upon receipt of the request for buying the commodity, the POS terminal 302 of the virtual store transmits the data for a payment method selection screen 354, as shown in Fig. 28, for selecting a payment method, to cause the payment method selection screen 354 to be displayed on the browser of the communication terminal 330 (step S404). In this case, when the person interested in buying commodities selects the payment by electronic money, then a request for selecting the electronic money settlement is sent out to the POS terminal 302 (step S405). When the POS terminal 302 receives the request for selecting the electronic money settlement, it transmits the data for an input prompting screen 356 showing a message "PLACE YOUR CARD OVER READ/WRITE APPARATUS" as shown in Fig. 28 to cause the message to be displayed on the browser of the communication terminal 330 (step S406).

When the person interested in buying commodities holds the integral IC card 310 over a read/write apparatus 304, the card information of the integral IC card 310 is transmitted to the POS terminal 302 from the read/write apparatus 304 through the intermediary of the communication terminal 330 (step S407).

When the card information of the integral IC card 310 is transmitted to the POS terminal 302, the POS terminal 302 performs, in step S408, the automatic crediting operation in the same procedure as that from step S302 of Fig. 22 to step S314 of Fig. 23 in, for example, the second embodiment. These operations are the same as those of the second embodiment, so that only a brief description will be given, and characteristic processing operations through the intermediary of the communication network 332 will now be described.

First, the controller 320 of the POS terminal 302 stores the foregoing card information in the storage 322, and determines whether the card has the function of an electronic money card on the basis of the data indicating the type of function among the card information (step S302 of Fig. 22). If the card does not have the function of an electronic money card, then the controller 320 proceeds mainly to the processing for displaying the payment method selection screen 354 again, and terminates the operation of the electronic money crediting system 301.

If the card has the function of an electronic money card and if an electronic money balance R1 of the card exceeds a sales price S of a commodity, then the POS terminal 302 brings a transaction screen 358, as shown in Fig. 28, onto the browser of the communication terminal 330, and also causes a resulting balance R2 to be displayed for the purchaser to check the balance of the electronic money.

Almost concurrently with the display of the transaction screen 358, the controller 320 of the POS terminal 302 sends out the card information with updated electronic money balance and use log to the communication terminal 330. The communication terminal 330 transmits the card information to the integral IC card 310 through the intermediary of the read/write apparatus 304 (step S314 of Fig. 23). A controller 314 of the integral IC card 310 stores the received card information in a storage 312 (step S408-1 of Fig. 27) .

The operation described above takes only a few seconds at the latest, and it is completed while the person interested in buying a commodity is holding the integral IC card over the read/write apparatus 304. Timeout processing may be provided such that, if the operation is delayed for some reason, a prompt is displayed on the browser of the communication terminal 330 to urge the person to hold the integral IC card 310 over the read/write apparatus 304 again.

The descriptions will now be given of a case where it is determined in step S304 of Fig. 22 that the electronic money balance R1 is smaller than the commodity sales amount S. First, if the card is not an integral card, then the operation of the electronic money crediting system 301 is terminated and the payment method selection screen 354 is displayed on the browser of the communication terminal 330 again to display a message (not shown) urging the shopper to select another payment method (step S408-2 of Fig. -27) .

If the card is an integral card but approval data is "0," then the payment method selection screen 354 is displayed again on the browser of the communication terminal 330 to display a message saying "The electronic money balance is short, but automatic crediting is not approved," and the operation of the electronic money crediting system 301 is terminated (the same step S408-2).

If the sum of the purchase electronic money balance R1 and an automatic crediting amount D is smaller than a sales amount S, then a message is displayed through the POS terminal 302 to ask the person interested in buying commodities about whether the automatic crediting procedure should be continued. If the person interested in buying commodities does not wish to continue the procedure, then the operation of the electronic money crediting system 301 is terminated (the same step S408-2).

If the automatic crediting can be continued, then the controller 320 of the POS terminal 302 sends out a request for checking credit to a credit checking center 308 via a dedicated line 306 (step S409) .

The credit checking center 308 selects the credit card company issuing the card on the basis of the received credit card number, and accesses the authentication database of the card company to prepare credit acceptance/rejection data. The prepared credit acceptance/rejection data is received by the POS terminal 302 (step S410) .

The controller 320 of the POS terminal 302 that has received the credit acceptance/rejection data moves to the determination of whether sale is acceptable, and if it decides that credit is disapproved, then it terminates the processing to cancel the transaction or asks the person interested in buying a commodity if he or she intends to pay by another method by causing the browser to display a disapproved transaction screen 360 shown in Fig. 28 (step S411).

If it is determined that the credit is approved, then the controller 320 of the POS terminal 302 overwrites the electronic money balance among the card information in the storage 322 by a balance R4, and overwrites the latest data of the use log by the present commodity purchase data, then transmits the card information in the storage 322 to the communication terminal 330 so as to input the card information in the integral IC card 310 through the intermediary of the read/write apparatus 304. At the same time, an approved transaction screen 358 shown in Fig. 28 is displayed on the browser, and the processing is terminated (step S411).

As described above, according to this embodiment, money is automatically supplied to a multi-functional integral IC card provided with an electronic money function, thus obviating the need for the efforts to access a virtual crediting machine 334 to supply electronic money even when the balance of electronic money becomes low. This makes it possible to carry out electronic commercial transactions by effortless electronic money.

The present invention is not limited to the embodiments described above, but it can be embodied in a variety of modifications.

For instance, in the above embodiments, the POS terminal 302 is installed at a store as a component unit of the electronic money crediting system 301; the present invention, however, is not limited thereto. The POS terminal 302 in the above embodiments may be of course replaced by an electronic cashless register or a personal computer system or the like with no POS function.

In the descriptions of the above embodiments, the contactless IC card has been taken as an example; however, the present invention is not limited thereto. The present invention can be of course applied to a contact type IC card with magnetic stripes attached thereto and to a combination of a read/write apparatus compatible therewith.

Furthermore, in the embodiments described above, the approval data, which is included in the card information stored in the integral IC card 310 comes in four types, "0", "3000", "5000", and "10000." The approval data, however, may obviously be other than the above four types, and the number of types or the automatic crediting amount may be freely selected and adopted. It is of course possible to use a system adapted to supply only the amount for covering the shortage in an electronic money balance at the time of purchasing a commodity, or to enable a card user to decide the automatic crediting amount on the spot at the time of automatic crediting.

In the second and fourth embodiments described above, there has been no restrictions on successive automatic crediting. Alternatively, however, it is of course possible to insert steps S322 and S323 of Fig. 25 at an appropriate point before step S311 of Fig. 23, as in the fourth embodiment, thereby restricting successive automatic crediting. In the fourth embodiment, it is alternatively possible to omit steps S322 and S323 of Fig. 25 so as not to restrict successive automatic crediting.

In the above embodiments, commission charges for the service of automatic crediting may be collected from users. This makes it possible to prevent the abuse of automatic crediting thereby to reduce the risk on service providers.

For the purpose of clarifying the explanation, the electronic money crediting system in accordance with the present invention has been explained in terms of the four embodiments, as shown by the second through fifth embodiments. Alternatively, however, it is of course possible to operate the electronic money crediting systems shown in these four embodiments separately and independently or to unitedly operate the systems.

In the above embodiments, the descriptions have been given by taking, as an example, the multi-functional integral card that has the function of an electronic money card and the function of a credit card; the present invention, however, is not limited thereto. The present invention can be applied also to, for example, a multi-functional integral card that combines the function of an electronic money card and the function of a debit card. In this case, the data on a credit card number and the valid date of the credit card among card information may be replaced by the name of a financial institution, an account number, etc., which is used as the information for checking credit.

Accordingly, unique settlement numbers include an account number of a financial institution in addition to a credit card number.

In the above descriptions, the automatic crediting carried out by the POS terminal has been explained as a function of the POS terminal. Alternatively, however, the automatic crediting may be implemented in terms of a program and may be installed on a POS terminal through the intermediary of a network or a recording medium, such as a CD-ROM. In this case, the operation after the installation will be as explained in conjunction with the first through fifth embodiments, so that the explanation thereof will be omitted.

According to the present invention, electronic money can be effortlessly supplied even if the balance of electronic money at the time of purchasing a commodity is smaller than the sales amount of a commodity desired to be purchased. Moreover, users can securely purchase commodities. The loss of chances for vendors of commodities to sell their commodities will be restrained, and the failure of collecting the money of purchase amounts will be restrained.

### Industrial Applicability

The present invention relates to an automatic crediting function of IC card type and network type electronic money. More specifically, the present invention relates to an IC card with an electronic money card function and an electronic money crediting system used to accomplish cashless purchase of commodities of small amounts and, more particularly, to an IC card equipped with a credit card function and an electronic money card function and an electronic money crediting system. Furthermore, the present invention relates to an electronic money system, information processing apparatus and method, a program, and a recording medium and, more particularly, to an electronic money system, an information processing apparatus and method, a program, and a recording medium that permits further secure purchase of commodities through the intermediary of a network.

Various aspects of embodiments are set out in the following numbered clauses:
1. An electronic money system comprising a first information processing apparatus of a user purchasing a commodity through the intermediary of a network a second information processing apparatus for selling the commodity to the user through the intermediary of the network and a third information processing apparatus for managing electronic money of the user wherein the first information processing apparatus accesses the second information processing apparatus through the intermediary of the network to request the purchase of the commodity the second information processing apparatus inquires, through the intermediary of the network of the third information processing apparatus the balance of electronic money held by the user with respect to the price of the commodity when an application of purchase of the commodity has been received from the first information processing apparatus through the intermediary of the network and upon receipt of the inquiry about the balance from the second information processing apparatus, the third information processing apparatus checks the balance of the user that it manages and if it is confirmed that the balance is below the price of the commodity, then the third information processing apparatus carries out credit processing, and adds an amount based on the result of the credit processing to the balance of the user.
2. An information processing apparatus connected to another information processing apparatus through the intermediary of a network, comprising: managing means for managing the electronic money of a user purchasing a predetermined commodity through the intermediary of the network; and adding means for carrying out credit processing and adding a credit amount based on the result of the credit processing to the balance of the user if the electronic money balance of the user that is managed by the managing means is below a purchase amount of the commodity.
3. The information processing apparatus according to clause 2, further comprising storing means for storing credit information for carrying out the credit processing, wherein the adding means carries out credit processing on the basis of the credit information stored in the storing means.
4. The information processing apparatus according to clause 3, wherein the adding means ranks the user on the basis of the result of the credit processing, and decides the credit amount on the basis of the ranking.
5. The information processing apparatus according to clause 2, further comprising requesting means for accessing a credit server through the intermediary of the network to request for credit processing, wherein the adding means carries out credit processing on the basis of the result of crediting by the credit server that is carried out in response to the request by the requesting means.
6. The information processing apparatus according to clause 2, wherein the managing means manages the electronic money balance of the user in association with a settlement number, and the credit amount is settled on the basis of the settlement number.
7. The information processing apparatus according to clause 6, wherein the managing means manages a card number of a credit card of the user as the settlement number.
8. The information processing apparatus according to clause 6, wherein the managing means manages an account number of a financial institution of the user as the settlement number.
9. The information processing apparatus according to clause 2, further comprising accepting means for accepting an inquiry about the electronic money balance of the user with respect to the purchase amount from the another information processing apparatus through the intermediary of the network, wherein the adding means carries out the adding on the basis of the inquiry of the balance accepted by the accepting means.
10. An information processing method for an information processing apparatus connected with another information processing apparatus through the intermediary of a network, comprising: a management step for managing electronic money of a user purchasing a predetermined commodity through the intermediary of the network; and an adding step for carrying out credit processing and adding a credit amount based on the result of the credit processing to the balance of the user if the electronic money balance of the user that is managed by the processing of the management step is below a purchase amount of the commodity.
11. The information processing method according to clause 10, further comprising a storing step for storing credit information for carrying out the credit processing, wherein the adding step carries out credit processing on the basis of the credit information stored by the processing of the storing step.
12. The information processing method according to clause 11, wherein the processing of the adding step ranks the user on the basis of the result of the credit processing, and decides the credit amount on the basis of the ranking.
13. The information processing method according to clause 10, further comprising a requesting step for accessing a credit server through the intermediary of the network to request for credit processing, wherein the adding step carries out credit processing on the basis of the result of crediting by the credit server that is carried out in response to the request by the processing of the requesting step.
14. The information processing method according to clause 10, wherein the processing of the management step manages the electronic money balance of the user in association with a settlement number, and the credit amount is settled on the basis of the settlement number.
15. The information processing method according to clause 14, wherein the processing of the management step manages a card number of a credit card of the user as the settlement number.
16. The information processing method according to clause 14, wherein the processing of the management step manages an account number of a financial institution of the user as the settlement number.
17. The information processing method according to clause 10, further comprising an acceptance step for accepting an inquiry about the electronic money balance of the user with respect to the purchase amount from the another information processing apparatus through the intermediary of the network, wherein the processing of the adding step carries out the adding on the basis of the inquiry about the balance accepted by the processing of the acceptance step.
18. A program for an information processing apparatus connected with another information processing apparatus through the intermediary of a network, the program causing a computer to carry out: a management step for managing electronic money of a user purchasing a predetermined commodity through the intermediary of the network; and an adding step for carrying out credit processing and adding a credit amount based on the result of the credit processing to the balance of the user if the electronic money balance of the user that is managed by the processing of the management step is below a purchase amount of the commodity.
19. The program according to clause 18, further comprising a storing step for storing credit information for carrying out the credit processing, wherein the adding step carries out credit processing on the basis of the credit information stored by the processing of the storing step.
20. The program according to clause 19, wherein the processing of the adding step ranks the user on the basis of the result of the credit processing, and decides the credit amount on the basis of the ranking.
21. The program according to clause 18, further comprising a requesting step for accessing a credit server through the intermediary of the network to request for credit processing, wherein the adding step carries out credit processing on the basis of the result of crediting by the credit server that is carried out in response to the request by the processing of the requesting step.
22. The program according to clause 18, wherein the processing of the management step manages the electronic money balance of the user in association with a settlement number, and the credit amount is settled on the basis of the settlement number.
23. The program according to clause 22, wherein the processing of the management step manages a card number of a credit card of the user as the settlement number.
24. The program according to clause 22, wherein the processing of the management step manages an account number of a financial institution of the user as the settlement number.
25. The program according to clause 18, further comprising an acceptance step for accepting an inquiry about the electronic money balance of the user with respect to the purchase amount from the another information processing apparatus through the intermediary of the network, wherein the processing of the adding step carries out the adding on the basis of the inquiry about the balance accepted by the processing of the acceptance step.
26. A recording medium having a computer-readable program recorded therein, the program being for an information processing apparatus connected with another information processing apparatus through the intermediary of a network, the program comprising: a management step for managing electronic money of a user purchasing a predetermined commodity through the intermediary of the network; and an adding step for carrying out credit processing and adding a credit amount based on the result of the credit processing to the balance of the user if the electronic money balance of the user that is managed by the processing of the management step is below a purchase amount of the commodity.

## Claims

1. An electronic money crediting system comprising: a POS terminal for performing settlement by electronic money that has a determiner for determining an electronic money balance received from an IC card and the level of the selling price of a commodity and a settlement means for carrying out settlement processing by adding a predetermined amount to the balance after carrying out predetermined credit processing if the electronic money balance is smaller than the selling price, and an IC card having an electronic money card function and another settlement function, a storage device that stores card information, including electronic money balance data, and permits reading and writing, and a controller that updates the electronic money balance by electronic money received from the POS terminal after predetermined credit processing is carried out if the electronic money balance at the time of purchasing a commodity is smaller than the selling price of the commodity desired to be purchased.

2. A POS terminal for carrying out settlement by electronic money, comprising a determiner for determining an electronic money balance received from an IC card and the level of the selling price of a commodity and a settlement means for carrying out settlement processing by adding a predetermined amount to the balance after carrying out predetermined credit processing if the electronic money balance is smaller than the selling price.

3. The POS terminal according to Claim 2, wherein the predetermined credit processing includes the processing that uses a unique settlement number to transmit a credit check request to a credit checking server, and determines whether the credit is acceptable on the basis of a credit result received from the credit checking server.

4. The POS terminal according to Claim 3, wherein the unique settlement number is a credit card number.

5. The POS terminal according to Claim 3, wherein the unique settlement number is an account number of a financial institution.

6. The POS terminal according to Claim 2, wherein the predetermined credit processing includes processing for determining whether the credit is acceptable on the basis of the credit rejection data received from a credit checking server.

7. The POS terminal according to Claim 2, wherein the predetermined credit processing includes processing for extracting the use log data of a credit card accumulated in an IC card to determine whether the date and time of use is closer to the current point than a preset reference date and time.

8. An IC card that has an electronic money card function and another settlement function, comprising: a storage device that stores card information including the data on electronic money balance and permits read/write; and a controller that updates the electronic money balance by the electronic money deposited through a POS terminal at a store after predetermined credit processing if the electronic money balance at the time of purchasing a commodity is smaller than the selling price of the commodity desired to be purchased.

9. The IC card according to Claim 8, wherein the settlement function is a credit card function.

10. The IC card according to Claim 8, wherein the settlement function is a debit card function.

11. A settlement program for performing settlement by electronic money, comprising: determining means for determining the electronic money balance received from an IC card and the level of a selling price of a commodity; and settlement means for adding a predetermined amount to a balance to perform settlement processing after carrying out predetermined credit processing if the electronic money balance is smaller than the selling price.

12. The settlement program according to Claim 11, wherein the predetermined credit processing includes processing for transmitting a credit checking request to a credit checking server by using a unique settlement number, and determining whether the credit is acceptable on the basis of a credit result received from the credit checking server.

13. The settlement program according to Claim 12, wherein the unique settlement number is a credit card number.

14. The settlement program according to Claim 12, wherein the unique settlement number is an account number of a financial institution.

15. The settlement program according to Claim 11, wherein the predetermined credit processing includes processing for determining whether credit is acceptable on the basis of the credit rejection data distributed from a credit checking server.

16. The settlement program according to Claim 11, wherein the predetermined credit processing includes processing for extracting the use log data of a credit card accumulated in an IC card to determine whether the date and time of use is closer to the current point than a preset reference date and time.

17. A settlement method for carrying out settlement by electronic money, whereby the electronic money balance received from an IC card and the level of a selling price of a commodity are determined, and if the electronic money balance is smaller than the selling price, then a predetermined amount is added to the balance after predetermined credit processing is carried out so as to implement the settlement processing.

18. The settlement method according to Claim 17, wherein the predetermined credit processing includes processing for transmitting a credit checking request to a credit checking server by using a unique settlement number, and determining whether the credit is acceptable on the basis of a credit result received from the credit checking server.

19. The settlement method according to Claim 18, wherein the unique settlement number is a credit card number.

20. The settlement method according to Claim 18, wherein the unique settlement number is an account number of a financial institution.

21. The settlement method according to Claim 17, wherein the predetermined credit processing includes processing for determining whether credit is acceptable on the basis of the credit rejection data distributed from a credit checking server.

22. The settlement method according to Claim 17, wherein the predetermined credit processing includes processing for extracting the use log data of a credit card accumulated in an IC card to determine whether the date and time of use is closer to the current point than a preset reference date and time.
